# EUROPEAN PATENT SPECIFICATION

(11) **EP 0 891 884 B1**
(45) Date of publication and mention of the grant of the patent: **04.06.2003**
(21) Application number: 98118926.9
(22) Date of filing: 07.08.1995
(51) Int. Cl.: B60G 21/06

(54) **Suspension system**
Aufhängungssystem
Système de suspension

(30) Priority: 16.09.1994 JP 22152694; 05.08.1994 JP 18475694
(43) Date of publication of application: 20.01.1999
(62) Divisional of application: 95112406.4
(73) Proprietor: YAMAHA HATSUDOKI KABUSHIKI KAISHA, Iwata-shi Shizuoka-ken, 438 (JP)
(72) Inventor: Sakai, Koji, c/o Yamaha Hatsudoki Kabushiki Kaisha, Iwata-shi, Shizuoka-ken (JP)
(74) Representative: Grünecker, Kinkeldey, Stockmair & Schwanhäusser Anwaltssozietät

(56) References cited:
- EP-A- 0 255 412
- DE-B- 1 176 693
- FR-A- 2 403 223
- GB-A- 2 186 947
- US-A- 3 008 728
- PATENT ABSTRACTS OF JAPAN vol. 018, no. 319 (M-1623), 17 June 1994 & JP 06 072127 A (YAMAHA MOTOR CO LTD), 15 March 1994
- PATENT ABSTRACTS OF JAPAN vol. 002, no. 036 (M-011), 10 March 1978 & JP 52 152017 A (AISIN SEIKI CO LTD;OTHERS: 01), 17 December 1977

## Description

The present invention relates to a suspension system for a vehicle according to the preamble of independent claim 1.

A suspension as mentioned above is known from JP-A-672 127, wherein oil chambers of respective hydraulic cylinders are interlocked with an oil chamber of a pressure adjusting device. Here a throttle member is provided for adjusting the dampening force of the suspension system, wherein said throttle member is arranged outside of the pressure adjusting device and is not changeable in its range of adjustment.

DE-B-1 176 693 and JP-A-52152017 disclose a suspension system wherein hydraulic cylinders are connected to each other through a pressure reservoir comprising valves, in particular spring valves, for setting a dampening force for the suspension system.

EP-A-0 255 412 discloses a hydraulic suspension, wherein the hydraulic cylinders of the respective wheels are connected to each other by a stiffness modulator which is connected by holes and cavities to an additional hydraulic pneumatic accumulator. An electro-magnetic valve arranged distant from the stiffness modulator is provided for connecting the suspension system with the additional hydraulic pneumatic accumulator, whereby the dampening force of the suspension system is increased.

GB-A-2 186 947 discloses a damper with variable damping forces, in particular a method of controlling said damping forces of said damper.

A suspension system suitable for restraining the 4-wheel vehicle body from rolling has been disclosed in Japanese Unexamined Patent Publication Sho63-222914.

The suspension system disclosed in this publication had hydraulic cylinders installed on both left and right of the vehicle between the wheel side and the body side, and the oil chambers of left and right hydraulic cylinders were made communicate with each other through communicating tubes. The piston for each hydraulic cylinder was provided with a throttle through which the oil chambers on both sides of the piston were made communicate with each other.

The suspension system above was provided with two communicating tubes, one for making the upper oil chamber (oil chamber on the vehicle body side of the piston) of the left hydraulic cylinder communicate with the lower oil chamber (oil chamber on the vehicle wheel side of the piston) of the right hydraulic cylinder and the other for making the lower oil chamber of the left hydraulic cylinder communicate with the upper oil chamber of the right hydraulic cylinder, and each communicating tube was provided with a throttle.

When the vehicle body is inclined and one of left and right hydraulic cylinders is shortened, oil is delivered from the lower oil chamber of the shortened hydraulic cylinder to the upper oil chamber of the hydraulic cylinder on the other side, while the oil is delivered from the lower oil chamber of the hydraulic cylinder on the other side. to the upper oil chamber of the shortened hydraulic cylinder. After all, both hydraulic cylinders are shortened and the vehicle body is restrained from getting inclined. In this instance, the rolling movement is damped by oil's passing through the throttles of pistons of both left and right hydraulic cylinders and through the throttle of the communicating tubes.

Also when left and right hydraulic cylinders are simultaneously shortened by both left and right wheels' riding over a projection on the road, or the like, the vertical movement of the vehicle body is damped by oil's passing simultaneously through the throttles of pistons of both left and right hydraulic cylinders and the throttle of the communicating tube.

However, with a suspension system constructed as described above, setting the damping property of the suspension system as a whole requires adding the damping property of the throttles at the pistons of hydraulic cylinders to that of the throttles in the communicating tubes. In other words, since the same throttles are used to generate damping forces both when the vehicle body is inclined to the left or right and when the vehicle body is vertically moved, setting becomes very troublesome when trying to obtain a damping force corresponding to the vehicle body behavior so that the damping force becomes weaker when the vehicle body moves up and down while intensely restraining the left and right inclinations.

Such an inconvenience can be solved by constructing so that oil does not flow through the throttle of the communicating tube when the left and right hydraulic cylinders are elongated or shortened in the same senses, because it becomes possible to limit the using conditions of the piston throttles and the communicating tube throttle. To realize such a structure, it is conceived to connect two communicating tubes extending from the lower oil chambers of the left and right hydraulic cylinders not to the left and right opposite side hydraulic cylinders but to other left and right hydraulic cylinders each partitioned into an oil chamber and a high pressure gas chamber by a free piston, to connect the free pistons of these hydraulic cylinders to each other through a rigid connecting member so as to operate together, and to make two communicating tubes communicate with each other through a throttle.

That is, when the vehicle body rides over the road surface and the left and right hydraulic cylinders installed between the vehicle wheels and the vehicle body are elongated or shortened in the same senses, the free piston of the added hydraulic cylinder moves along, and oil does not flow into the throttle for making communicating tubes communicate with each other, and the damping force is obtained exclusively by the throttles of the pistons of the left and right hydraulic cylinders. When the vehicle body is inclined to the left or right, since the left and right free pistons can not move separately, although a pressure difference is caused between two oil chambers of a hydraulic cylinder having free pistons, this pressure difference is offset by oil flowing from the high pressure side hydraulic passage into the low pressure side hydraulic passage through a throttle making communicating tubes communicate with each other. In this instance, the damping force is obtained by the throttles of the pistons of left and right hydraulic cylinders and the throttle making communicating tubes communicate with each other.

Therefore, since the damping force is obtained by two kinds of throttles when the vehicle body. is inclined to the left or right, and by one kind of throttles when the vehicle body is moved up or down, the using condition of each throttle can be limited, and setting becomes easier.

However, when adding a hydraulic cylinder having a free piston as described above, there is caused a problem in manufacturing this hydraulic cylinder. If two free pistons are arranged in parallel to each other and are connected with each other through a rigid connecting member, when a pressure difference is caused between two oil chambers and one free piston influences the movement of the other, a bending moment works on the rigid connecting member above so that the free piston wrenches the cylinder wall surface, which may make it difficult for this free piston to move.

Further, to connect the free pistons with each other through a rigid connecting member requires providing the cylinder with a space for accommodating this rigid connecting member or rigidly connecting the piston rods connected with the respective free pistons with each other out of the cylinders, which makes the cylinder structure complicated.

Still further, since it becomes larger-sized because the cylinders must be arranged in parallel to each other, and the high pressure gas chambers of cylinders arranged in parallel to each other must communicate with each other, its productivity is lower.

Moreover, the structure of those suspension systems has hitherto been quite bulky and complicated and there have been problems in arranging and mounting the system to a vehicle body.

It is an objective of the present invention to improve a suspension system as indicated in the preamble of independent claim 1 so as to have a simple and more handy structure, thereby reducing the space required and facilitating the mounting of the system.

According to the present invention, this objective is solved by a suspension system for a vehicle according to the independent claim 1.

According to a preferred embodiment, the piston unit comprises a stepped piston having a large diameter portion and a small diameter portion arranged substantially coaxially with respect to each other, said piston being slidably received in a cylinder body having corresponding small and large diameter portions to define said first and second hydraulic pressure chambers.

According to another preferred embodiment said throttle member is adjustable in response to vehicle driving conditions.

In a preferred embodiment, a throttle member casing is provided integrally with said cylinder body at the fluid chamber side thereof, said throttle member casing accommodating a throttle body partitioning the same into a first and second throttle chamber, each of which is connected with one of said first and second hydraulic pressure chambers of the cylinder unit and one of said fluid chambers of the shock absorbers. Said throttle member casing defines preferably an interior extending substantially perpendicular to the longitudinal axis of the cylinder body then having an opening at one side for mounting and inserting said throttle body perpendicular to the longitudinal axis of the cylinder body. Further preferred embodiments of the invention are laid down in other dependent claims.

Accordingly , when two hydraulic cylinders are elongated or shortened in the sames senses, the amount of oil passing through the throttle of the pressure adjusting cylinder is small and the operation of the hydraulic cylinders are damped by the oil's passing through the throttles of the pistons of the hydraulic cylinders. When two hydraulic cylinders are elongated or shortened in the contrary senses, since more oil flows through the throttle member on the pressure adjusting cylinder side, the operation of the hydraulic cylinders are damped by the oil's passing through both throttles of the pistons of the hydraulic cylinders and the throttle member on the pressure adjusting cylinder side. Therefore, when a difference is caused between the senses of actions of two hydraulic cylinders, the throttle member on the pressure adjusting cylinder side exhibits a damping effect.

Further, since the pressure is applied to the free piston only in the direction of its axis even when a pressure difference is caused between the base portion side and the projected portion side of the pressure adjusting cylinder because the free piston is of a stepped structure in which its projected portion is included within the projection area of its base portion and the axes of its base portion and its projected portion are disposed close to and in parallel to each other, the free piston is not wrenched.

Still further, since the free piston is of a stepped structure, the free piston has a structure substantially corresponding to that obtained by rigidly connecting two kinds of pistons without using a separate connecting member. Since no connecting member is required between free pistons and the pressure adjusting cylinder may be of a single axis structure because the axes of two kind of free pistons are disposed close to each other, the pressure adjusting cylinder becomes smaller-sized. Moreover, since the free piston is of a structure in which its projected portion is included within the projection area of the base portion and the axes of its base portion and its projected portion are disposed in parallel to each other, these two portions can be easily formed and the parallelism of the axes of both portions is easily obtained.

Still further, since the stepped free piston can be formed through pressing or machining, they can be formed with a high accuracy and a high productivity.

In addition, since the stepped free piston formed with a high accuracy as described above can be accurately fitted in the pressure adjusting cylinder, the sliding resistance against the movement of the free piston can be smaller.

Furthermore, the structure of the hydraulic passage making the throttle member and the pressure adjusting cylinder communicate with each other is simplified. Further, a common bracket can be used when fixing the throttle member and the pressure adjusting cylinder on the vehicle body.

Moreover, the communicating passage making two in-casing spaces of the throttle member with base portion side oil chamber and the projected portion side oil chamber of the pressure adjusting cylinder, respectively, can be formed by boring with a drill through the pressure adjusting cylinder along its axis.

Last but not least, since one axial end of the throttle body constitutes an inner wall of the projected portion side oil chamber, the oil passage for leading oil from the projected portion side oil chamber to the throttle body becomes unnecessary.

Hereinafter, the present invention will be explained and illustrated in greater detail by means of preferred embodiments of the invention in connection with accompanying drawings,
wherein:
Fig.1 is a schematic structural illustration of a suspension system for 4-wheel vehicles according to an embodiment
Fig.2 is a front view of a suspension system for 4-wheel vehicles according to the first embodiment,
Fig.3 is an arrow view taken along the arrow III in Fig. 2.
Fig.4 is a sectional view taken along the line IV-IV in Fig. 2.
Fig.5 is a sectional view taken along the line V - V in Fig. 2.
Fig.6 is a cross-sectional view of the pressure adjusting unit taken along the line VI-VI in Fig. 4.
Fig.7 is a sectional view taken along the line VII-VII in Fig.4 showing an air-vent valve portion of the pressure adjusting unit in a larger scale,
Fig.8 is a sectional view showing the state in which the adjusting valve of the throttle member is fully opened,
Fig.9 is a sectional view showing the state in which a free piston positioning jig is mounted on the pressure adjusting unit,
Fig.10 is a graph showing a current value map to be used for controlling the solenoid type adjusting valve device of the throttle member,
Fig.11 is an illustration showing an application in which the suspension system is applied between left and right front wheels,
Fig.12 is an illustration showing an.application in which the suspension system is applied between left and right rear wheels,
Fig.13 is an illustration showing an application in which the suspension system according to the first through third embodiments is applied between left and right front wheels and also between left and right rear wheels,
Fig.14 is an illustration showing an application in which the suspension system is applied between left front and rear wheels and also between right front and rear wheels,
Fig.15 is an illustration showing an application in which the suspension system is applied between left front and right rear wheels and also between right front and left rear wheels,
Fig.16 is an illustration showing an application of the suspension system in which only one pressure adjusting unit is employed, and one oil chamber is made communicate with hydraulic passages of hydraulic cylinders for left front and left rear wheels while the other oil chamber is made communicate with hydraulic passages of hydraulic cylinders for right front and right rear wheels,
Fig.17 is an illustration showing an application of the suspension system in which only one pressure adjusting unit is employed, and one oil chamber is made communicate with hydraulic passages of hydraulic cylinders for left front and right rear wheels while the other oil chamber is made communicate with hydraulic passages of hydraulic cylinders for right front and left rear wheels,
Fig.18 is a sectional view showing another example of the throttle body,
Fig.19 is a top view showing an example provided with a manual adjusting valve device,
Fig.20 is a sectional view taken along the line XX-XX in Fig. 19,
Fig.21 is a sectional view showing the schematical structure of the pressure adjusting unit to be used in a suspension system for 4-wheel vehicles according to another embodiment,which does not fall under the scope of claim 1,
Fig.22 is a graph showing the relation between the piston speed difference between the left and right hydraulic cylinders and the damping force at the throttle member,
Fig.23 is a front view showing an example in which the hydraulic cylinder is integrally provided with a pressure adjusting cylinder,
Fig.24 is a sectional view showing a practical example of the pressure adjusting unit to be used in the suspension system for 4-wheel vehicles
Fig.25 is a front view showing another embodiment in which the pressure adjusting unit is provided on the axis of the left hydraulic cylinder,
Fig.26 is a sectional view showing the pressure adjusting unit in a larger scale,
Fig.27 is a sectional view showing still another embodiment in which the pressure adjusting unit is provided on the axis of the hydraulic cylinder, and
Fig.28 is a front view showing another embodiment in which the pressure adjusting unit is provided separately from the hydraulic cylinder,
Fig.29 is a sectional view showing the pressure adjusting unit in a larger scale,
Fig.30 is a sectional view showing another embodiment in which the bypass passage of the free piston is provided with a movable throttle for finely adjusting the damping force,
Fig.31 is a sectional view taken along the line A-A in Fig. 30.
Fig.32 is a front view showing another embodiment in which the damping force at the pressure adjusting unit is adjusted by remote control, and
Fig.33 is a sectional view showing the pressure adjusting unit in a larger scale.

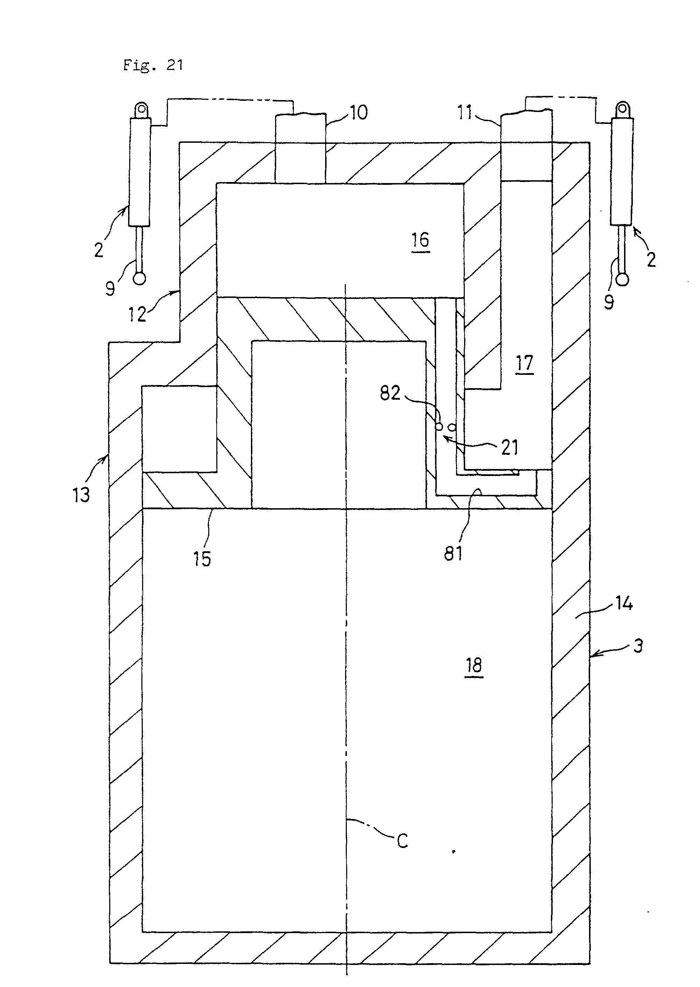

Here, it is stated that the embodiments 3 -8 as shown in figures 21, 23 - 33 do not fall under the scope of the independent claim 1 and are only kept in the description in order to facilitate the understanding of the detailed description.

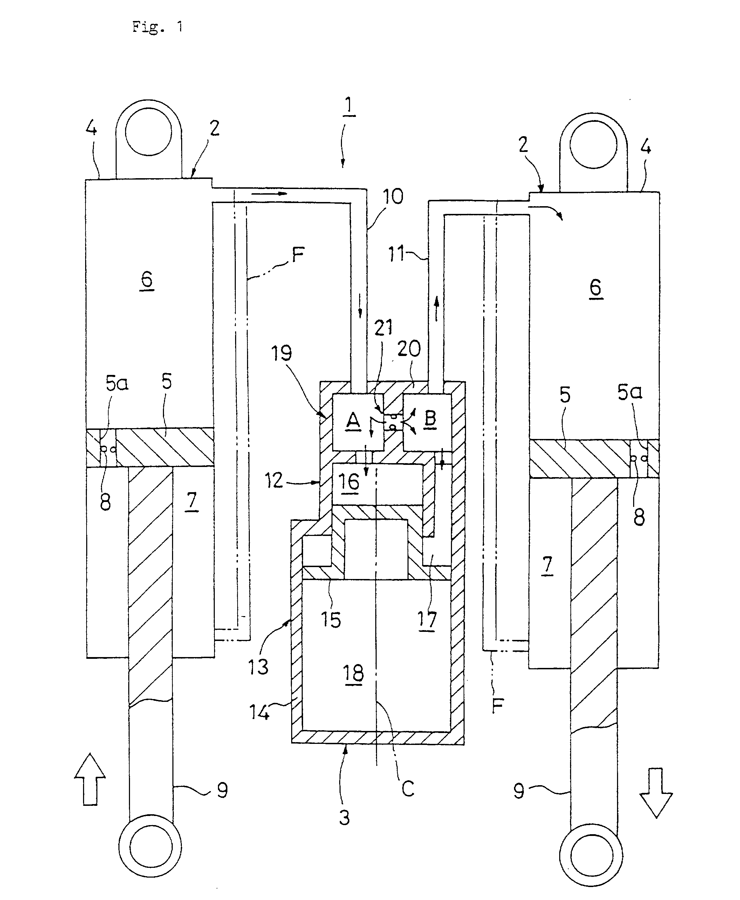

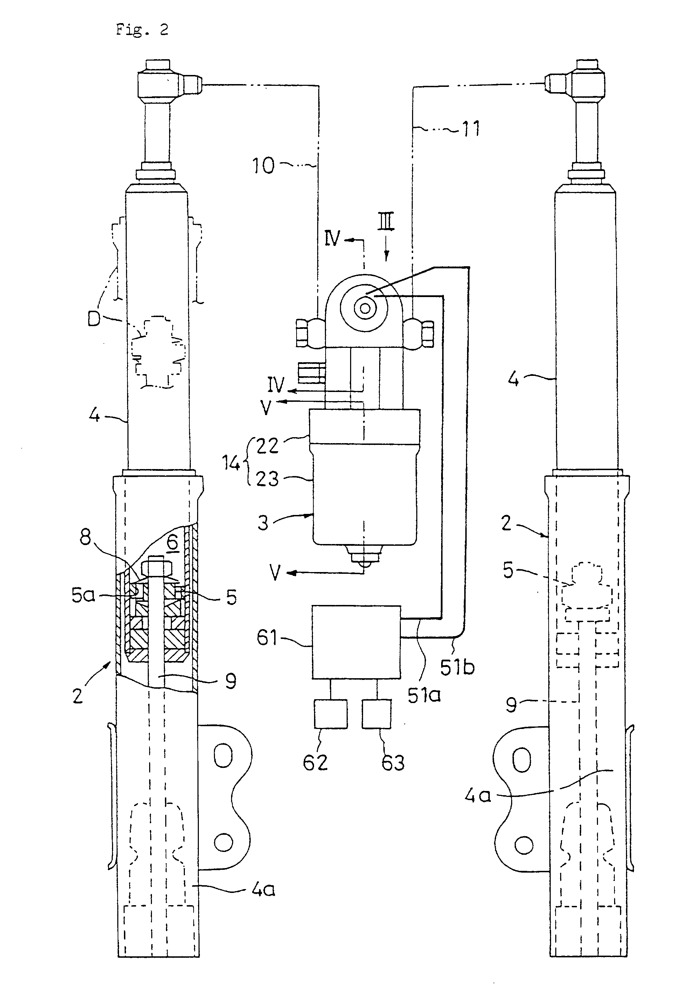

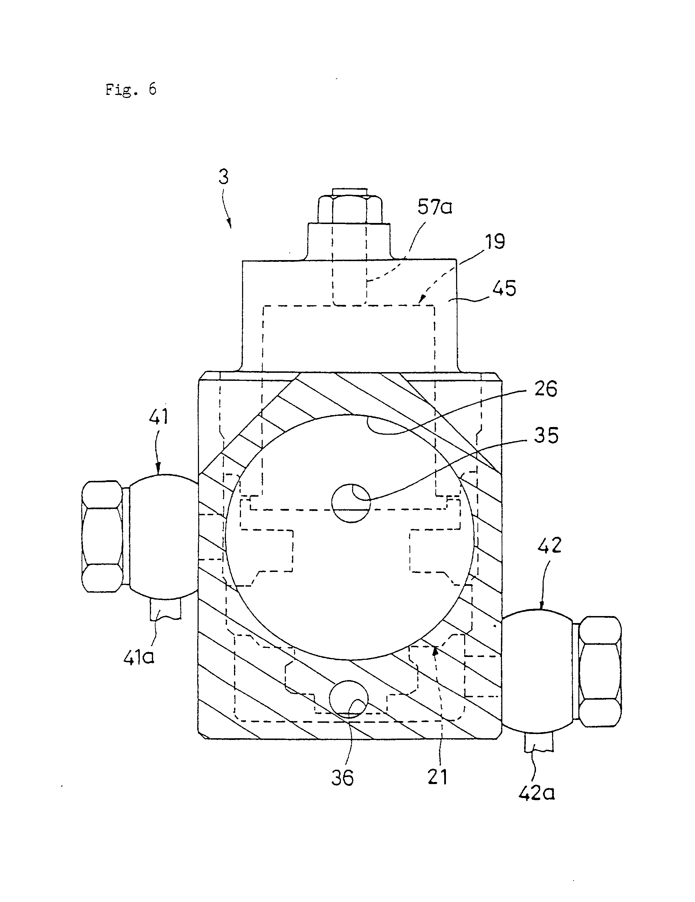

A first preferred embodiment is described in detail hereinafter referring to figures 1 through 10. In these drawings, a suspension system for 4-wheel vehicles according to the first embodiment to be installed on, for example, the front wheel side is provided with a symbol 1. In Figs. 1 and 2, other suspension system component members such as the link mechanism supporting the front wheels for their vertical movements, cushion springs, etc., are omitted.

The suspension system 1 for 4-wheel vehicles shown in Fig.1 is constructed with left and right hydraulic cylinders 2, a pressure adjusting unit 3 connected to these hydraulic cylinders 2, and so on.

The left and right hydraulic cylinders 2 are of the same structure in which the cylinder body 4 filled with oil is partitioned into an upper oil chamber 6 and a lower oil chamber 7 by a piston 5. The piston 5 is provided with a communicating passage 5a through which the upper and lower oil chambers 6 and 7 are made communicate with each other, and the communicating passage 5a is provided with a throttle 8.

The hydraulic cylinder 2 is installed between the vehicle body side and the front wheel side by connecting the cylinder body 4 to the vehicle body (not shown) and pivotally supporting the lower end portion of the piston rod 9 on a region, such as the front wheel suspension link, to be moved vertically relative to the vehicle body together with the front wheel. The vertical sense of installation of the hydraulic cylinder 2 may be contrary to that described above. In this embodiment, the hydraulic cylinder 2 positioned on the left in Fig.1 is installed on the left front wheel side while the hydraulic cylinder 2 positioned on the right in Fig.1 is installed on the right front wheel side.

The left hydraulic passage 10 made communicate with the upper oil chamber 6 of the left hydraulic cylinder 2 and the right hydraulic passage 11 made communicate with the upper oil chamber 6 of the right hydraulic cylinder 2 are, while being made communicate with the pressure adjusting cylinders to be described later, respectively, made communicate with each other through a throttle member to be described later. The pressure adjusting cylinder is partitioned into oil chambers and a high pressure gas chamber by a free piston, and the free pistons for both hydraulic passages are formed integrally into a single member so as to operate together.

The pressure adjusting unit 3 is constructed integrally by arranging two pressure adjusting cylinders for both hydraulic passages described above on an identical axis, and combining these pressure adjusting cylinders and the throttle member integrally. Here, the schematic structure of the pressure adjusting unit shown in Fig.1 is described.

The pressure adjusting cylinder 12 for the left hydraulic cylinder and the pressure adjusting cylinder 13 for the right hydraulic cylinder shown in Fig.1 are arranged on the identical axis and are integrated by inserting a common free piston 15 in its common cylinder body 14. The free piston 15 is formed generally like a bottomed cylinder with a base portion having a larger diameter and a projected portion having a smaller diameter arranged on a common axis shown with a dash-and-single-dotted line C in Fig. 1. This projected portion substantially constitutes the piston portion for the pressure adjusting cylinder 12, while the base portion substantially constitutes the piston portion for the pressure adjusting cylinder 13.

The symbols 16, 17 and 18 refer to the oil chamber for the pressure adjusting cylinder 12, the oil chamber for the pressure adjusting cylinder 13 and the high pressure gas chamber separated from the oil chambers 16 and 17 by the free piston 15 and filled with high pressure gas.

That is, the piston portions for both pressure adjusting cylinders 12 and 13 operates together with each other because they are constructed with a single free piston 15 composed of a base portion and a projected portion.

The oil chamber side portion of the cylinder body 14 is integrally provided with a throttle member 19 composed of a throttle member casing 20 formed on the oil chamber side end portion of the cylinder body 14 and a throttle body 21 partitioning the space in the throttle casing 20 into two chambers A and B arranged in a direction perpendicular to the axes of the pressure adjusting pistons. The left hydraulic passage 10 from the left hydraulic cylinder 2 is made communicate with the oil chamber 16 of the pressure adjusting cylinder 12 through one A of the two chambers A and B while the right hydraulic passage 11 from the right hydraulic cylinder 2 is made communicate with the oil chamber 17 of the pressure adjusting cylinder 13 through the other B of the two chambers A and B.

When installing a suspension-system 1 constructed as described above on a body of an automobile, its component members are constructed as shown in Figs.2 through 9. In these drawings, members identical or similar to those already described referring to Fig.1 is provided with the same symbols, and their detailed descriptions are omitted.

The hydraulic cylinder 2 shown in Fig.2 is formed by inserting the lower portion of the cylinder body 4 into the outer cylinder 4a. A piston rod 9 is fixed on the outer cylinder 4a, and the outer cylinder 4a is pivotally supported on a region which moves vertically together with the front wheel. The throttle 8 of the piston 5 of this hydraulic cylinder 2 is of a known structure in which the opening of the communicating passage 5a is closed with a plate spring type check valve. Fig.2 shows the most elongated state of the hydraulic cylinder 2 with solid lines, and, additionally, positions of the piston and outer cylinder top end portion in the most shortened state with dash-and-double-dotted lines D. Fig.2 shows the most elongated state of the hydraulic cylinder 2.

The pressure adjusting unit 3 is constructed with a cylinder body 14 composed of a throttle connecting portion 22 and a bottomed cylindrical cover portion 23 screwed over one end of this throttle connecting portion 22, and a throttle member 19 integrally connected to the other end portion of the throttle connecting portion 22. The free piston 15 is formed as a stepped bottomed cylinder by forming a projected portion 24 fitted in the throttle connecting portion 22 and a base portion 25 fitted in the cover portion 23 integrally and coaxially with each other. Describing further in detail, the free piston 15 has a stucture in which its projected portion 24 is included within a projection area of the base portion 25 as seen in the axial direction and the axis of the projected portion and the axis of the base portion are disposed in parallel and close to (in this embodiment, coaxially with) each other.

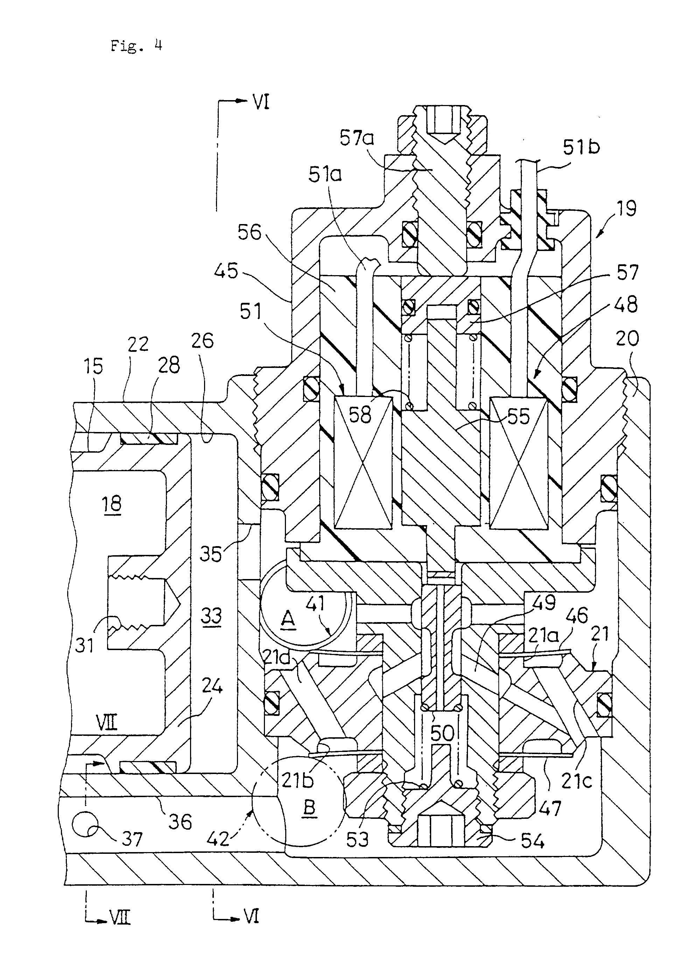

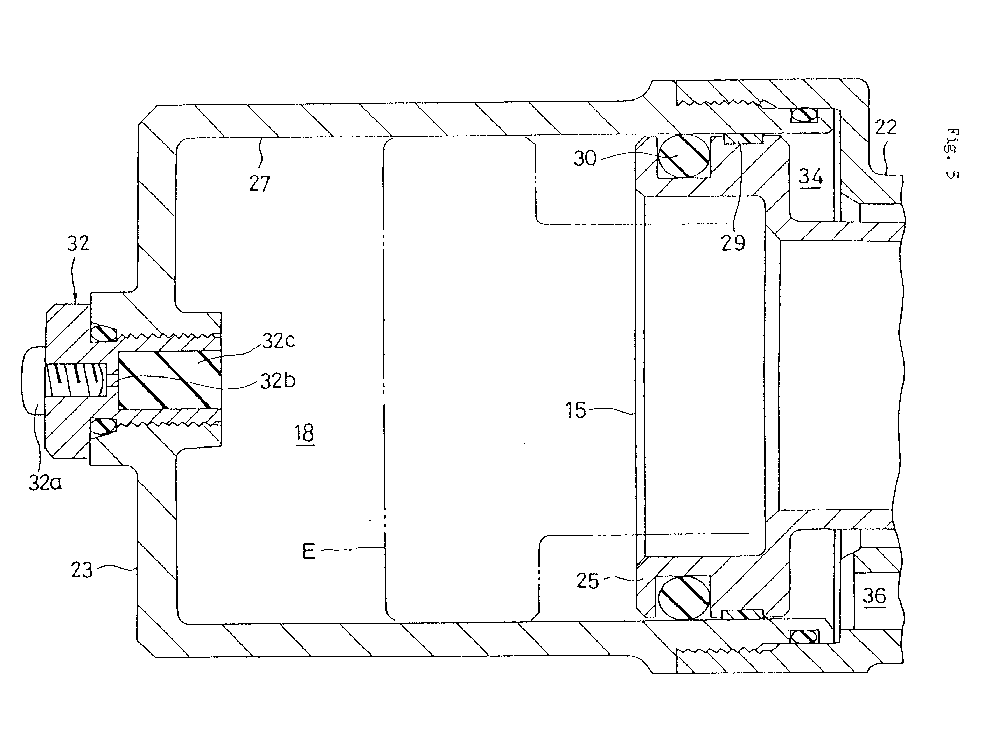

The projected portion 24 of this free piston 15 is fitted in the smaller diameter cylinder bore 26 of the throttle connecting portion 22 as shown in Fig.4, and the base portion 25 thereof is fitted in the larger diameter cylinder bore 27 formed with the inner surface of the cover portion 23 as shown in Fig.5. Members provided on the peripheries of the projected portion 24 and base portion 25 of the free piston 15 and shown with symbols 28 and 29 are sealing members made of fluorocarbon resin, and a member provided on the periphery of the base portion 25 of the free piston 15 and shown with a symbol 30 is an 0-ring for sealing high pressure gas. This free piston 15 has a thread hole 31 formed at its inside bottom center to fasten, through a screw, a jig to be used when assembling the free piston 15 into the cylinder body 14.

The cover portion 23 has a plug member 32 through which high pressure gas is poured into the high pressure gas chamber 18. This plug member 32 is installed through the end portion of the cover member 23 on its side opposite to the throttle connecting portion 22 and is constructed so that high pressure gas can be poured into the cover member 23 by, with the blind screw 32a removed, inserting a gas pouring injection needle into the inner needle hole 32b, piercing it through the sealing rubber 32c and making it penetrate this sealing rubber 32c.

By assembling the free piston 15 into the cylinder body 14 formed as described above, the projected portion side oil chamber 33, base portion side oil chamber 34 and high pressure gas chamber 18 are formed in the cylinder body 14. The outer diameters of the projected portion 24 and the base portion 25 of the free piston 15 are so set that the volume increment and the volume decrement of the oil chambers 33 and 34 obtained by the movement of the free piston 15 are equal to each other. The position of the free piston at which the volumes of the oil chambers 33 and 34 are maximum is shown with dash-and-double-dotted lines E in Fig. 5.

As shown in Fig.4, the projected portion side oil chamber 33 is made communicate with the chamber A in the throttle member 19 through a communicating hole 35 opening through the wall surface facing the top surface of the free piston 15 and extending in the direction of the free piston 15 axis, while, as shown in Figs.4 and 5, the base portion side oil chamber 34 is made communicate with the chamber B in the throttle member 19 through a communicating hole 36 bored through the throttle connecting portion 22 in parallel to the smaller diameter cylinder bore 26. These communicating holes 35 and 36 are bored with drills. As shown in Fig.4, the communicating hole 36 is made communicate with an air-vent oil pouring hole 37 to be described later.

The throttle member 19 is composed of a generally bottomed cylindrical throttle member casing 20 formed by extending the projected portion side oil chamber 33 side end portion of the throttle connecting portion 22 from the projected portion side oil chamber 33 in the axial direction, a throttle body 21 partitioning the casing 20 into two chambers A and B arranged in a direction perpendicular to the axis of the cylinder body 14, and so on.

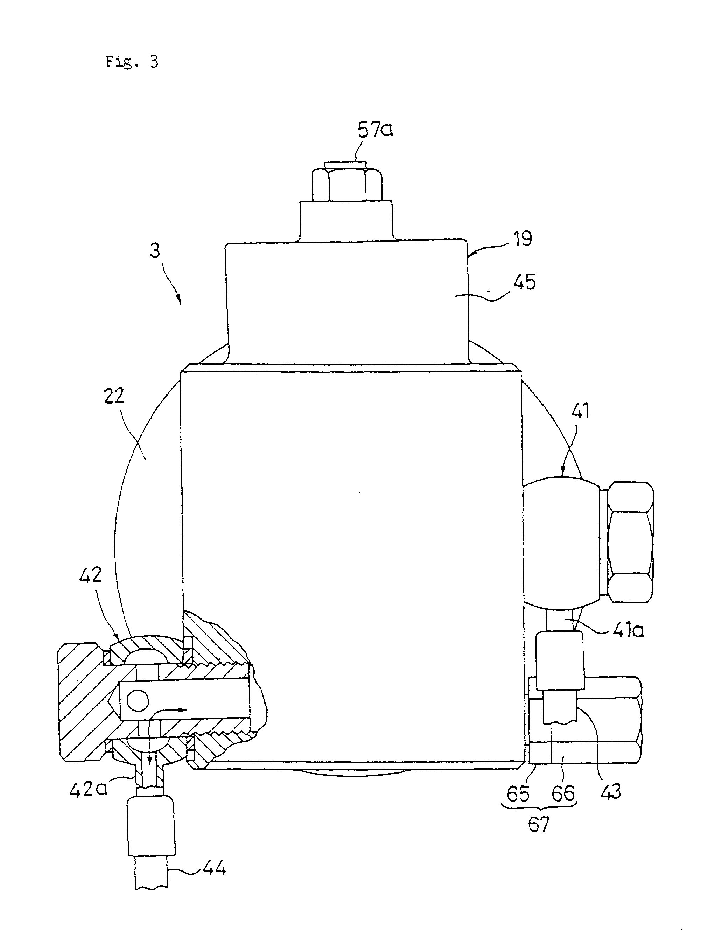

The chambers A and B are made communicate with the left hydraulic passage 10 and right hydraulic passage 11 through oil hose connecting members 41 and 42 screwed into the side portions of the casing 20 as shown in Fig.3. The oil hoses 43 and 44 constituting the left and right hydraulic passages 10 and 11, respectively, are caulked to the oil pipes 41a and 42a of the oil hose connecting members 41 and 42, respectively. Thus, the left and right hydraulic passages 10 and 11 from the left and right hydraulic cylinders 2 are made communicate with the projected portion side oil chamber 33 and the base portion side oil chamber 34 through the chambers A and B, respectively.

The throttle body 21 is formed generally like a circular disk as a whole, and its core portion is penetrated by a valve supporting member 45 so that the throttle body 21 is supported and fixed on the valve supporting member 45. The valve supporting member 45 is screwed into the opening portion of the casing 20 formed generally like a bottomed cylinder so as to close this opening, and forms the chamber A in cooperation with the throttle body 21. The throttle body 21 has annular grooves 21a and 21b formed on both axial end surfaces thereof. These grooves 21a and 21b are made communicate with the spaces in the casing 20 on the opposite side of the throttle body 21 through respective communicating holes 21c and 21d penetrating the throttle body 21. That is, the groove 21a on the chamber A side is made communicate with the chamber B through a communicating hole 21c, while the groove 21b on the chamber B side is made communicate with the chamber A through a communicating hole 21d. The opening sides of these grooves 21a and 21b are closed with annular plate spring check valves 46 and 47 supported and fixed in close contact therewith all around on the valve supporting member 45 together with the throttle body 21. Each of the check valves 46 and 47 is initially formed as a flat annular plate, then is formed so that a spring force is obtained in the installed state by bending it by pressing it against the throttle body 21 surface.

If such check valves 47 and 48 are provided, when the hydraulic pressure in the chamber A becomes higher than that in the chamber B, a hydraulic pressure is applied to the check valve 47 through the communicating passage 21d opening the check valve 47, and oil flows from the chamber A into the chamber B through the communicating hole 21d and the groove 21b. 0n the contrary, when the hydraulic pressure in the chamber B becomes higher than that in the chamber A, the check valve 46 is opened by a hydraulic pressure propagating through the communicating hole 21c, and oil flows from the chamber B into the chamber A. That is, this throttle member 19 is of a dual-sense structure in which resistance is generated when a check valve 46 or 47 is opened and oil flows between the chambers A and B.

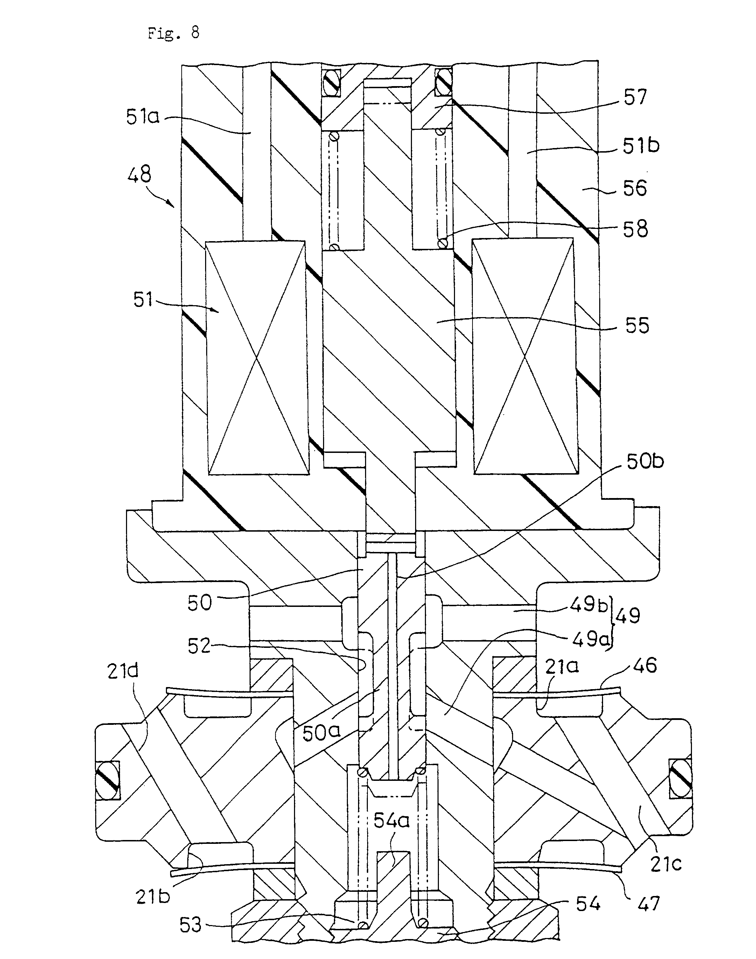

In addition to two kinds of oil passages to be opened and closed by the check valves 46 and 47, the valve supporting member 45 is provided with a solenoid type adjusting valve device 48 for finely adjusting the throttle amount at the throttle body 21. This solenoid type adjusting valve device 48 has a structure shown in Figs.4 and 8 in which a spool valve 50 is disposed in a bypass passage 49 between the midsection of the communicating passage 21c and the chamber A, and this spool valve 50 is operated by a computer-controlled solenoid 51.

The bypass passage 49 is composed of a first passage 49a extending from one end opened into the communicating hole 21c to the other end opened into the spool valve hole 52 in the core portion of the throttle body 21 with an inclination toward the chamber A, and a second passage 49b radially extending from a region apart, axially of the valve supporting member 45, from the opening of the first passage 49a into the spool valve hole 52 toward the chamber A. Both these passages 49a and 49b are formed plurally so as to be positioned opposite to each other radially outside of the spool valve hole 52. Further, the plurality of first passages 49a and the plurality of second passages 49b are so constructed that a similar hydraulic pressure is applied to them respectively.

If the bypass passage 49 is constructed as described above, since the hydraulic pressure propagating from the chamber A or B reaches the spool valve hole 52 from both sides thereof positioned radially opposite to each other, the hydraulic pressures of oil passing through the plurality of first oil passages 49a or through the plurality of second oil passages 49b cancel one another, because the directions of hydraulic pressure propagation are opposite to each other. Therefore, even if a dynamic pressure is applied to the chamber A or B, the spool valve 50 is little moved by the dynamic pressure, because this dynamic pressure does not work to move the spool valve 50.

The spool valve 50 is provided with a smaller diameter portion 50a with which an oil passage is formed in the spool valve hole 52, and is inserted in the spool valve hole 51 of the valve supporting member 45 slidably along the axial direction. The spool valve 50 is so constructed that the bypass passage 49 is opened or closed by making the first passage 49a communicate with the second passage 49b or by cutting off the communication therebetween. Fig.4 shows the fully closed state, while Fig.8 shows the fully opened state and the fully closed state with solid lines and dash-and-double-dotted lines, respectively.

When the spool valve 50 is in the fully closed state, the throttle amount at the throttle body 21 reaches the amount corresponding to the spring force of the check valves 46 and 47 and becomes maximum, while, when the spool valve 50 is in the fully opened state, it becomes possible for oil to flow between the chambers A anf B through the bypass passage 49, the amount of the oil push-opening the check valve 46 and 47 decreases and the throttle amount decreases. The decrement of the throttle amount changes according to the opening of the spool valve. The spool valve is provided with a small hole 50b formed therethrough to prevent the spool valve 50 from functioning as a piston when the spool valve 50 moves along by making the spaces on one and the other end sides thereof communicate with each other.

A compression coil spring 53 for urging the spool valve 50 toward the solenoid 51 is elastically installed between a spring pusher 54 screwed into the tip end of the valve supporting member 45 and the tip end of the spool valve 50. The spring pusher 54 has a column portion 54a projected therefrom toward the spool valve 50. This column portion 54a functions as a guide when the compression coil spring 53 is installed.

A pusher 55 in contact with the base end (upper end in Figs.4 and 8) of the spool valve 50 is fitted, slidably in a direction the same as that of the spool valve 50, in a resin portion 56 holding the solenoid 58 in position relative to the valve supporting member 45, and is moved in the axial direction by energizing the solenoid 51. When the solenoid 51 is energized, the pusher 55 is moved toward the spool valve by the magnetic force.

The end portion of the pusher 55 on its side farther from the spool valve 50 is fitted in a guide member 57 installed in the resin portion 56 coaxially with the pusher 55, and a compression coil spring 58 is elastically installed between the guide member 57 and the pusher 58. As the spring 58, one having a spring force smaller than that of the spool valve side spring 53 is employed. An adjusting bolt 57a is screwed into the valve supporting member 45, and its tip end is kept in contact with the end surface of the guide member 57 on its side farther from the pusher 55. Therefore, the position of the guide member 57 can be varied by changing the screwing amount of the adjusting bolt 57a into the valve supporting member 45.

That is, while the solenoid 51 is not energized, the spool valve 50 and the pusher 55 are both pushed upward as seen in Figs.4 and 8 (to the spool valve 50 opening side) due to the spring force difference between both compression coil springs 53 and 58. When the solenoid 51 is energized and the pusher 55 is urged downward in Figs.4 and 8 by the magnetic force, if the resultant of this magnetic force and the spring force of the pusher side compression coil spring 58 becomes larger than the spring force of the spool valve side compression coil spring 53, the pusher 55 is moved downward (to the spool valve 50 closing side) as seen in Figs.4 and 8 together with the spool valve 50. The length of the movement in this instance, in other words, the opening of the spool valve 50, is controlled by the magnitude of the electric current energizing the solenoid 51.

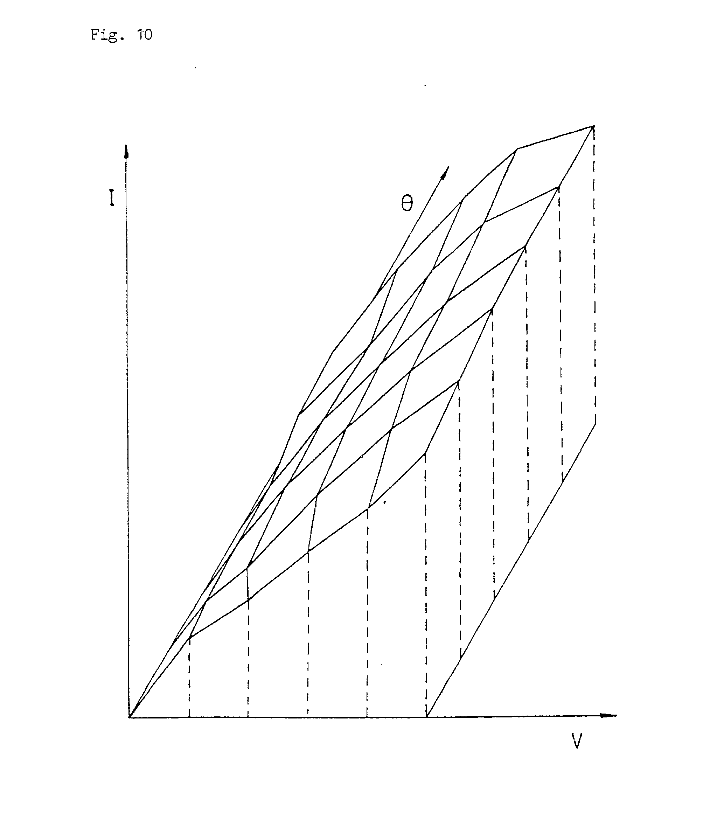

The solenoid 51 is connected to the ECU 61 through lead wires 51a and 51b as shown in Fig.2, and the magnitude of the solenoid energizing electric current is controlled by the ECU 61. The ECU 61 is connected to the vehicle speed sensor for detecting the vehicle speed and the steering angle sensor 63 for detecting the steering angle at the steering handle or steering wheel (front wheel), and is so constructed that a current value I is obtained from the current value map shown in Fig.10 on the basis of the detection values of these sensors, and the solenoid 51 is energized with this electric current I.

The current value map above is constructed by allocating the current values I with the vehicle speeds V and the steering angles θ. When this current value map is used, the current value I increases and the opening of the spool valve 50 decreases as the vehicle speed V and the steering angle θ increase. This embodiment is so set that the spool valve 50 is fully closed as shown in Fig.4 or in Fig.8 with dash-and-double-dotted lines when the current value I becomes maximum in the current value map. When setting as described above, the screwing amount of the adjusting bolt 57a into the valve supporting member 45 is adjusted in a state with the solenoid 51 energized with the maximum current so that the pusher 55 and the spool valve 50 are brought to their lowest positions in Figs.4 and 8 by the resultant force of the magnetic force of the solenoid 51 and the spring force of the pusher side compression coil spring 58.

When assembling the pressure adjusting unit 3 constructed as described above, the valve supporting member 45 of the throttle member 19 is screwed into the throttle connecting portion 22 of the cylinder body 14, and the free piston 15 and cover portion 23 are assembled. When assembling, 0-rings are installed at various portions so that oil does not leak from between the mating surfaces of component members.

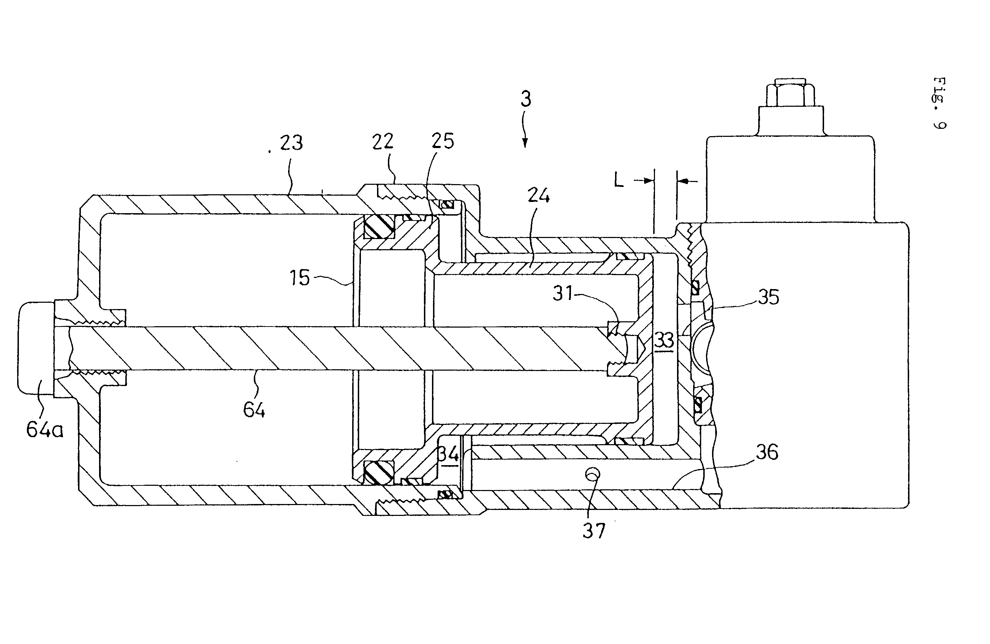

When assembling the free piston 15, before screwing the cover portion 23 into the throttle connecting portion 22, a positioning jig 64 constituted of a long bolt as shown in Fig.9 is inserted into the cover portion 23 through its screw hole in which a plug member 32 is to be screwed later, then this jig 64 is screwed into the screw hole 31 of the free piston 15. The length of the positioning jig 64 is so determined that, by bringing its head portion 64a into contact with the cover portion 23 and screwing the free piston 15 over the end screw portion, an initial gap provided with a symbol L in Fig.9 is formed between the projected portion side end surface of the free piston 15 and the opposite bottom surface of the throttle connecting portion 22.

Since the free piston 15 is brought to its position closest to the opposite surface above by pouring oil while securing such a gap L as described above, the free piston 15 never comes into metallic contact with the opposite surface above however the left and right hydraulic cylinders 2 may be elongated or shortened. Moreover, even if oil is discharged from the surfaces of the piston rods 9 of left and right hydraulic cylinders 2 due to their long service, the discharged oil can be supplemented by the movement of the free piston 15 within the range of the initial gap L above.

Next, the cover portion 23 on which the free piston 15 is tentatively held through the positioning jig 64 as described above is screwed into the throttle connecting portion 22. It is also possible not to adhere to the procedure above but to employ another procedure in which the cover portion 23 is screwed into the throttle connecting portion 22 with the free piston 15 preliminarily inserted, nearer to the high pressure gas chamber. 18 side, in the throttle connecting portion 22, then the positioning jig 64 is inserted in the cover portion 23 from outside and screwed into the free piston 15.

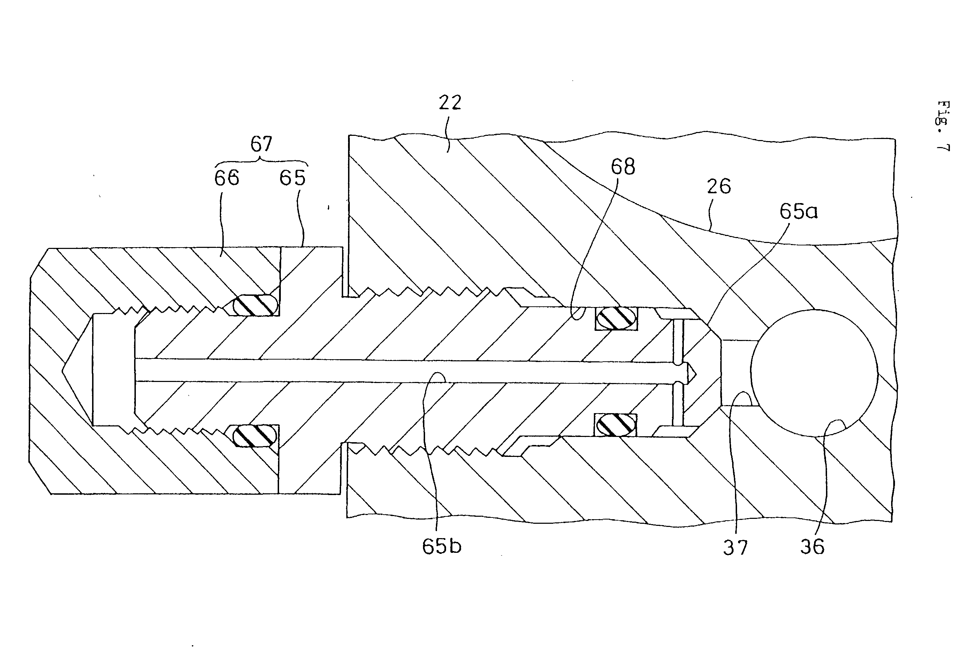

After assembling the pressure adjusting unit 3 as described above, oil is poured into the whole hydraulic system with the left and right hydraulic cylinders 2 fully elongated. Oil is poured in through the air-vent oil pouring hole 37 of the pressure adjusting unit 3. As shown in Fig.7, the air-vent oil pouring hole 37 is made communicated with outside through an oil pouring valve 67 composed of a bolt-like valve body 65 and a cap 66 screwed over the valve body 65.

The bolt-like valve body 65 is so formed as to be screwed into the valve hole 68 of the throttle connecting portion 22, and has a tapered surface 65a so formed at its tip end as to come into close contact with the bottom portion of the valve hole 68, and a flow passage 65b formed therethrough to make the space in the valve hole 68 on the valve body tip end side and the space in the cap 66 on the other end side communicate with each other. That is, when the oil pouring valve 67 is brought into its opened state by removing the cap 66 from the valve body 65 and loosening the valve body 65 as to the throttle connecting portion 22, the air-vent oil pouring hole 37 is made communicate with the outside of the unit through a gap formed between the tapered surface 65a and the valve hole bottom portion, a space near the gap above in the valve hole 68 and the flow passage 65b.

When pouring oil, an oil pouring device (not shown) is connected to the valve body 65 brought into the opened state as described above. The oil pouring device is so constructed that the oil outlet of an oil tank containing oil and the suction inlet of a vacuum pump are selectively connected to the valve body 65. First, the vaccum pump is operated with the suction inlet thereof connected to the valve body 65 to suction out air in the pressure adjusting unit 3, left and right hydraulic passages 10 and 11, and hydraulic cylinders 2. Then, the outlet of the oil tank is connected to the valve body 65 to make oil be suctioned into all component members of the system above through the flow passage 65b. Thus, the whole system is filled with oil.

After pouring oil, the valve body is tightened into the fully closed state shown in Fig.7, the oil pouring device is disconnected from the valve body 65 and the cap 66 is screwed thereon instead. Then, the positioning jig 64 which has been used to position the free piston 15 is loosened from the free piston 15 and pulled out of the cover portion 23, and a plug member 32 is screwed in the cover member 23. Finally, high pressure gas is poured in the high pressure gas chamber 18 through this plug member by a high pressure gas pouring injection needle.

Thus, assembling is completed.

Next, the operation of the suspension system 1 constructed as described above is described.

For example, when both left and right hydraulic cylinders 2 are shortened by both left and right front wheels' riding over a projection on the road or the like, oils of amounts corresponding to the insertions of the piston rods 9 into the cylinder bodies 4 flow out into respective hydraulic passages 10 and 11, and oils of amounts corresponding to the flow-outs above flow into the chambers A and B of the pressure adjusting unit 3. In this instance, supposing that the hydraulic pressures in both hydraulic passages 10 and 11 are equal to each other, since there is no pressure difference between the chambers A and B, and oil does not flow through the throtte body 21, nearly all of the oil corresponding to the flow-out amount flows into the projected portion side oil chamber 33 and the base portion side oil chamber 34 in the pressure adjusting unit 3.

Here, the free piston 15 of the pressure adjusting unit 3 is moved along in the cylinder body 14 by the hydraulic pressure applied to the oil chambers 33 and 34 compressing the high pressure gas. In this instance, since the smaller diameter cylinder bore 26 and the larger diameter cylinder bore 25 are sealed from each other by sealing members 28 and 29 made of fluorocarbon resin, when a dynamic pressure is applied to the oil chambers 33 and 34, the projected portion 24 and the base portion 25 of the free piston 15 move along according to the applied pressure with a high responsiveness. In other words, although 0-rings are elastically deformed by the hydraulic pressure propagating between the free piston 15 and the cylinder bore and the free piston 15 may not move along while the 0-rings under dynamic pressure are being elastically deformed if 0-rings are used instead of these sealing members 28 and 29, such inconvenience can be avoided by employing the structure of this embodiment.

That is, when the vehicle body pitches or bounces and the left and right hydraulic cylinders 2 are elongated or shortened in the same senses, the vibration of the vehicle body is restrained by the resistance against the oil flow through the throttles 8 in the hydraulic cylinders 2.

When the left hydraulic cylinder is shortened and the right hydraulic cylinder is elongated by a right turn of the vehicle body or the like, oil flows out of the left hydraulic cylinder 2 into the left hydraulic passage 10 similarly to the case described above, and oil flows, on the contrary, into right hydraulic cylinder 2 from the right hydraulic passage 11. The direction of oil flow in this instance is shown in Fig.1 with arrows.

In such an instance, since the hydraulic pressure in the left hydraulic passage 10 becomes higher than that in the right hydraulic passage 12, oil flows from the chamber A to the chamber B through the throttle body 21 of the throttle member 19, more than half of oil flowing out of the left hydraulic cylinder 2 flows into the right hydraulic passage 12 through the throttle body 21, and oil flowing from the left hydraulic passage 10 into the right hydraulic passage 11 are divided, in the chamber B of the throttle member 19, into a communicating hole 36 side flow toward the base portion side oil chamber 34 and an oil hose connecting member 42 side flow toward the right hydraulic cylinder 2. In this instance, the free piston 15 of the pressure adjusting unit 3 moves along in the cylinder body 14 according to the amounts of oil flowing through the commuicating hole 35 making the chamber A communicate with the projected portion side oil chamber 33 and oil flowing through the communicating hole 36 making the chamber B communicate with the base portion side oil chamber 34. When the vehicle body is inclined to the right on the contrary, the suspension system operates similarly to the case described above, except that the direction of oil flow through the throttle body 21 is reversed.

That is, when the left and right hydraulic cylinders 2 are elongated or shortened in contrary senses by rolling of the vehicle body or the like, the vibration of the vehicle body is damped by the resistence against the oil flow through the throttles 8 in the hydraulic cylinders 2 and the resistance against the oil flow through the throttle body 21 of the throttle member 19.

Therefore, with a suspension system 1 constructed as described above, when the left and right hydraulic cylinders 2 operate in the same senses, the amount of oil passing through the throttle body 21 of the throttle member 19 is small, and the operations of the hydraulic cylinders are damped by the resistance against the oil flow through the throttles 8 of of the pistons 5. When both hydraulic cylinders operate in contrary senses, the amount of oil passing through the throttle body 21 of the throttle member 19 increases, the operations of the hydraulic cylinders are damped by the resistances against the oil flows through the throttles 8 of the pistons 5 of the hydraulic cylinders and also by the resistance against the oil flow through the throttle body 21 of the throttle member 19. Therefore, the damping effect becomes larger when the senses of operations of two hydraulic cylinders 2 are different from each other.

Further, since the free piston 15 is of a stepped structure and its projected portion and base portion are formed coaxially, the hydraulic pressure is applied to the free piston 15 only in the axial direction even when there is a pressure difference between the projected portion side oil chamber 33 and the base portion side oil chamber 34, and the free piston is never be wrenched.

Further, since the free piston 15 is of a stepped structure, the free piston 15 has a structure obtained substantially by rigidly connecting two kinds of pistons with each other without employing any separate connecting member. Therefore, since the connecting member is unnecessary and the cylinder body 14 can be of a single axis structure because two kinds of free pistons are connected coaxially, the pressure adjusting unit 3 can be smaller-sized.

In addition, since the stepped free piston 15 can be formed by pressing and machining using lathes, ete., it can be formed easily with high accuracy and with high productivity.

Still further, since the throttle member 19 is integrally provided on the cylinder body 14 having a stepped free piston 15, the structure of the oil passage for making the throttle member 19 communicate with the cylinder body 14 can be simplified. Further, a common bracket can be employed when securing the throttle member 19 and the cylinder body 14 on the vehicle body.

Moreover, since the throttle member 19 is constructed with a throttle member casing 20 formed on the oil chamber side end portion of the cyllinder body 14 and a throttle body 21 partitioning the space in the throttle member casing 20 into two chambers A and B arranged in a direction perpendicular to the axis of the cylinder body 14, and the left hydraulic passage 10 from the left hydraulic cylinder 2 is made communicate with the projected portion side oil chamber 33 through the chamber A while the right hydraulic passage 11 from the right hydraulic cylinder 2 is made communicate with the base portion side oil chamber 34 through the chamber B, the communicating holes 35 and 36 for making the chambers A and B of the throttle member 19 communicate with the projected portion side oil chamber 33 and the base portion side oil chamber 34, respectively, can be easily formed y boring with a drill through the cylinder body 14 along its axis.

Although the descriptions above are for an embodiment in which the pressure adjusting unit 3 is connected to the upper oil chambers 6 of the left and right hydraulic cylinders 2, the pressure adjusting unit 3 may be connected to the lower oil chambers 7 as shown in Fig.1 with dash-and-double-dotted lines. With such a structure also, an effect similar to that of this embodiment can be obtained.

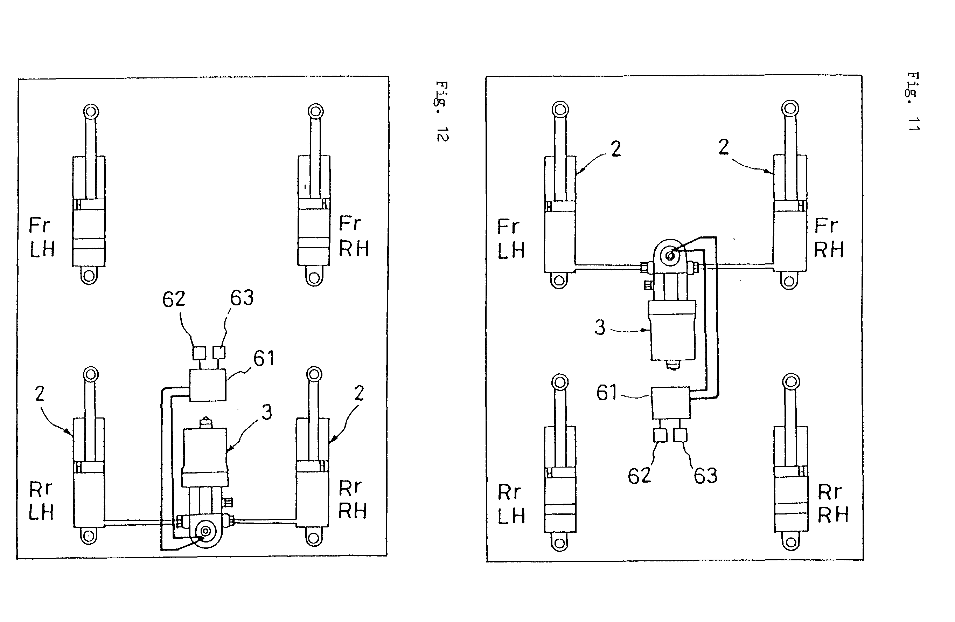

When applying the suspension system according to this invention to vehicle wheels, the manner of application may be suitably modified as shown in Figs.11 through 17. In these drawings, members identical or equivalent to those already described referring to Figs. 1 through 10 are provided with the same symbols, and their detailed descriptions are omitted.

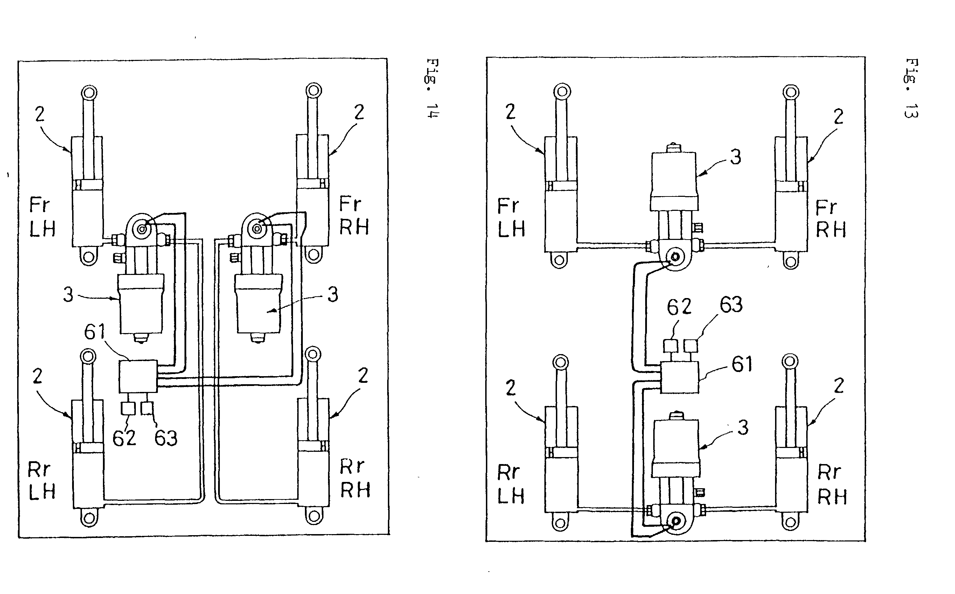

Fig.11 shows an application in which this suspension system is applied between the left and right front wheels as shown in Figs.1 through 10, Fig.12 shows an application in which this system is applied between the left and right rear wheels, and Fig.13 shows an application in which this system is applied between both front wheels and also between both rear wheels. The applications shown in Figs.11 through 13 are effective for restraining rolling of the vehicle body.

When this system is applied between both front wheels and also between both rear wheels as shown in Fig.13, a structure is employed in which the solenoid type adjusting valve devices 48 for both pressure adjusting unit 3 is controlled by a single ECU 61. When employing this structure, it is possible to control both solenoid type adjusting valve devices 48 for the front wheel side and the rear wheel side using a single current value map, or to control the solenoid type adjusting valve devices 48 for the front wheel side and for the rear wheel side independently by preparing a separate current value map for each side.

Fig.14 shows an application in which this system is applied between both lefthand wheels and also between both righthand wheels. This application is effective for restraining pitching of the vehicle body.

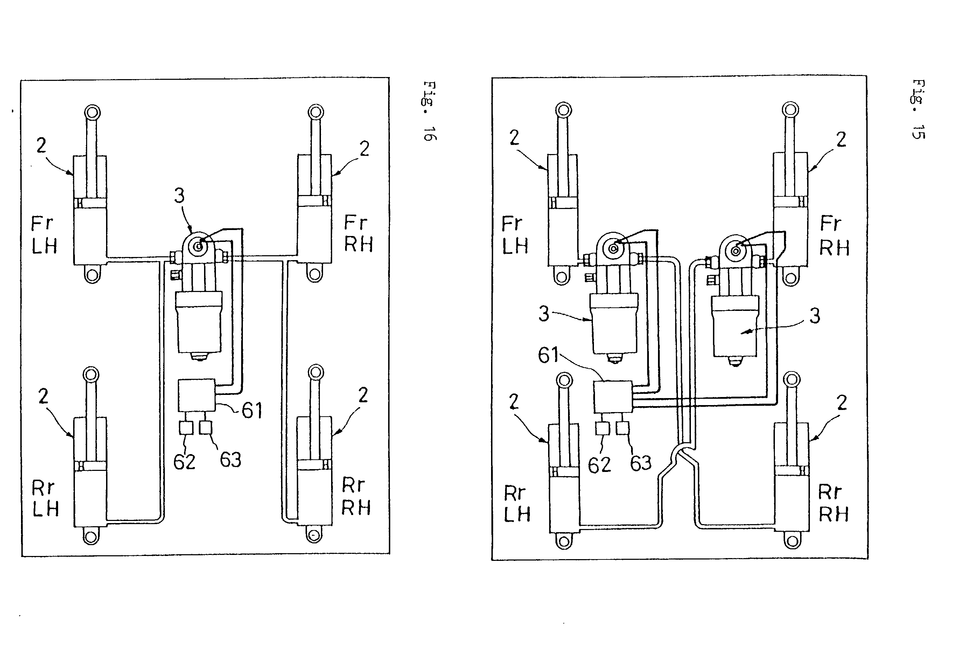

Fig.15 shows an application in which this system is applied between the left front wheel and the right rear wheel and also between the right front wheel and the left rear wheel. This application is effective not only for restraining pitching and rolling of the vehicle body but also for restraining vehicle body behavior caused by combination of pitching and rolling.

Fig.16 shows an application in which only one pressure adjusting unit 3 is used, one oil chamber is made communicate with hydraulic passages of both front and rear left wheels and the other oil chamber is made communicate with hydraulic passages of both front and rear right wheels. With this application, not only rolling can be restrained, but it is possible to make it difficult for the damping force to work when front wheels and rear wheels moves so as to twist in the lateral direction as seen from front. For example, even if the left front wheel rides over a projection on the road, the shock to the vehicle body can be smaller.

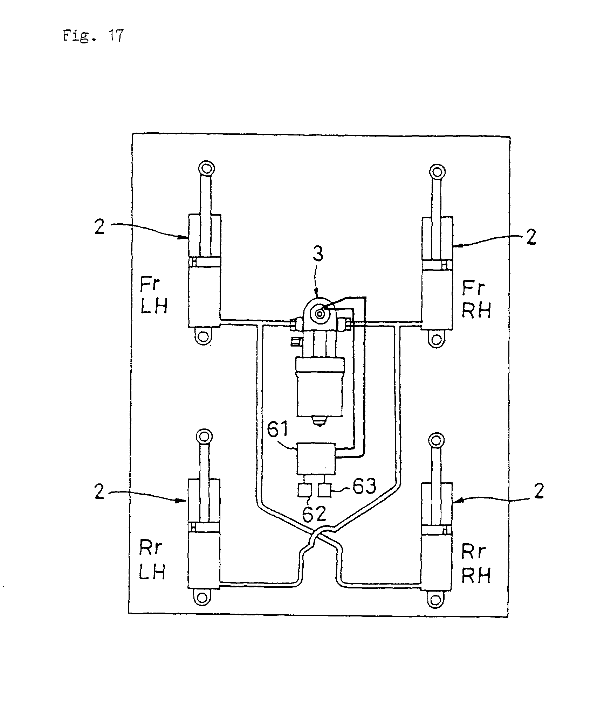

Fig.17 shows an application in which only one pressure adjusting unit 3 is used, one oil chamber is made communicate with hydraulic passages of both front left and rear right wheels and the other oil chamber is made communicate with hydraulic passages of both front right and rear left wheels. With this application, a larger damping force works when front wheels and rear wheels move so as to twist in the lateral direction as seen from front.

### Embodiment 2

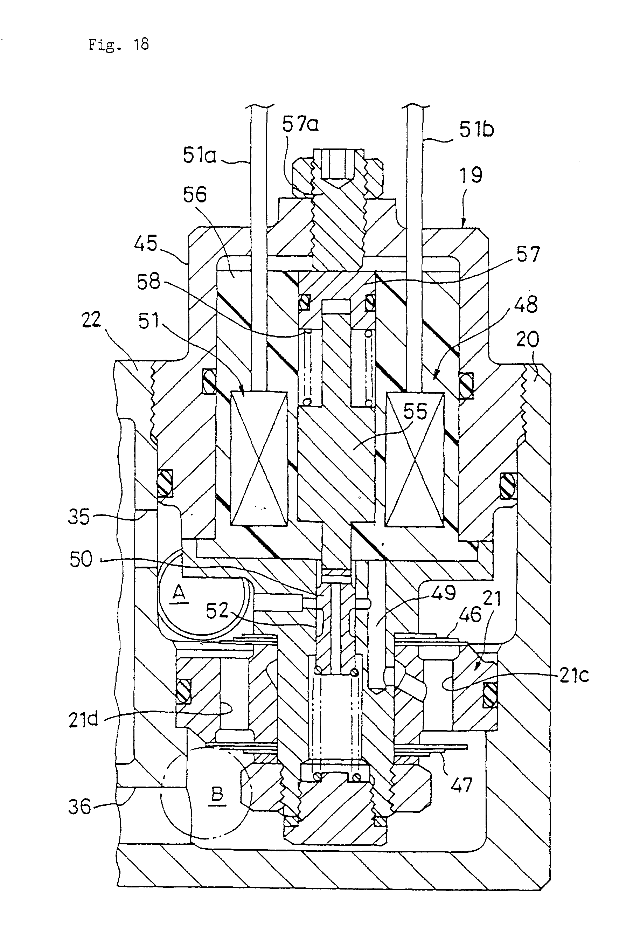

The throttle member to be used in the pressure adjusting unit 3 can be constructed as shown in Figs.18 through 20.

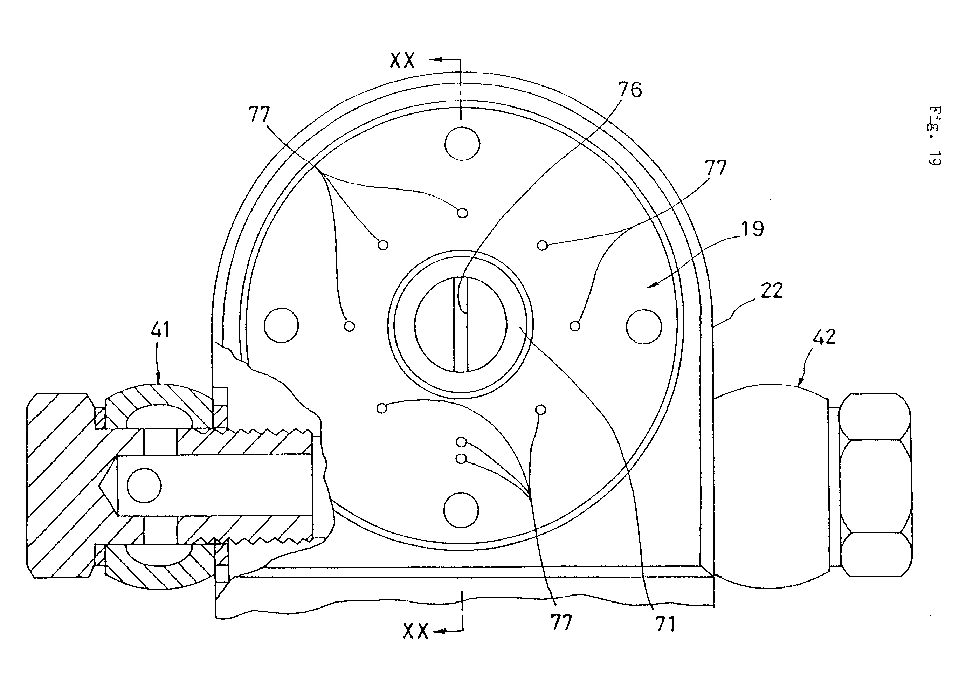

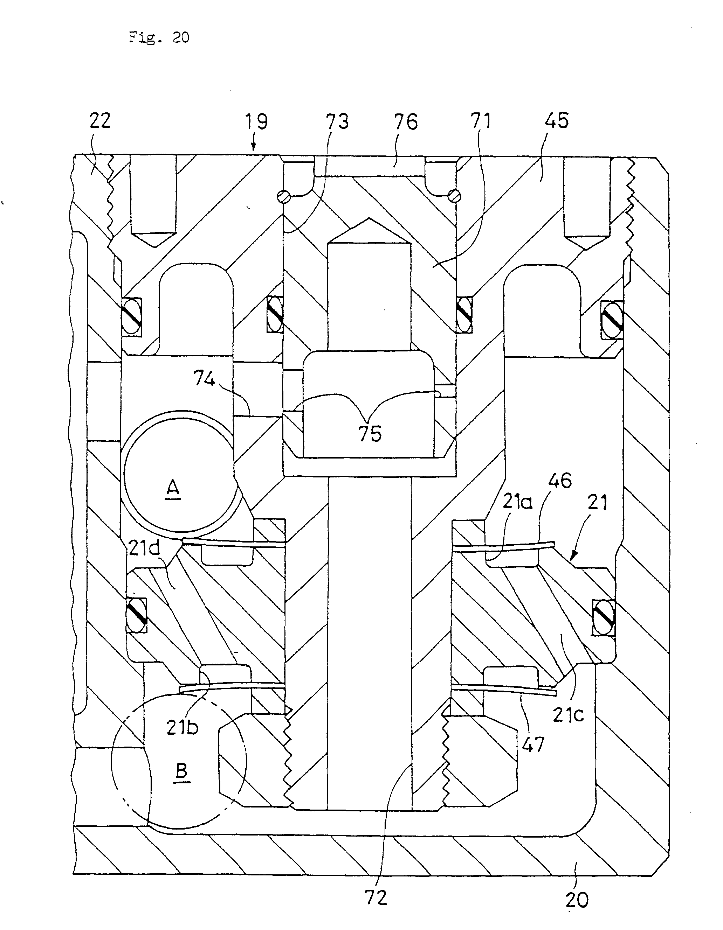

Fig.18 is a sectional view showing another example of the throttle body, Fig.19 is a top view showing an example provided with a manual adjusting valve device, and Fig.20 is a sectional view taken along the line XX-XX in Fig.19. In these drawings, members identical or similar to those already described referring to Figs. 1 through 17 are provided with the same symbols, and their detailed dscriptions are omitted.

The throttle member 19 shown in Fig.18 has check valves 46 and 47 for opening and closing the communicating holes 21c and 21d of the throttle body 21 formed by piling a plurality of circular disks in the axial direction. The throttle body 21 of this embodiment has a structure similar to that of the pistons 5 used in left and right hydraulic cylinders 2. Further, the bypass passage 49 has its communicating,portion in communication with the spool valve hole 52 radially extended so that the spool valve 50 is not moved by the dynamic pressure. This communicating portion in communication with the spool valve hole 52 is formed at one place in this embodiment.

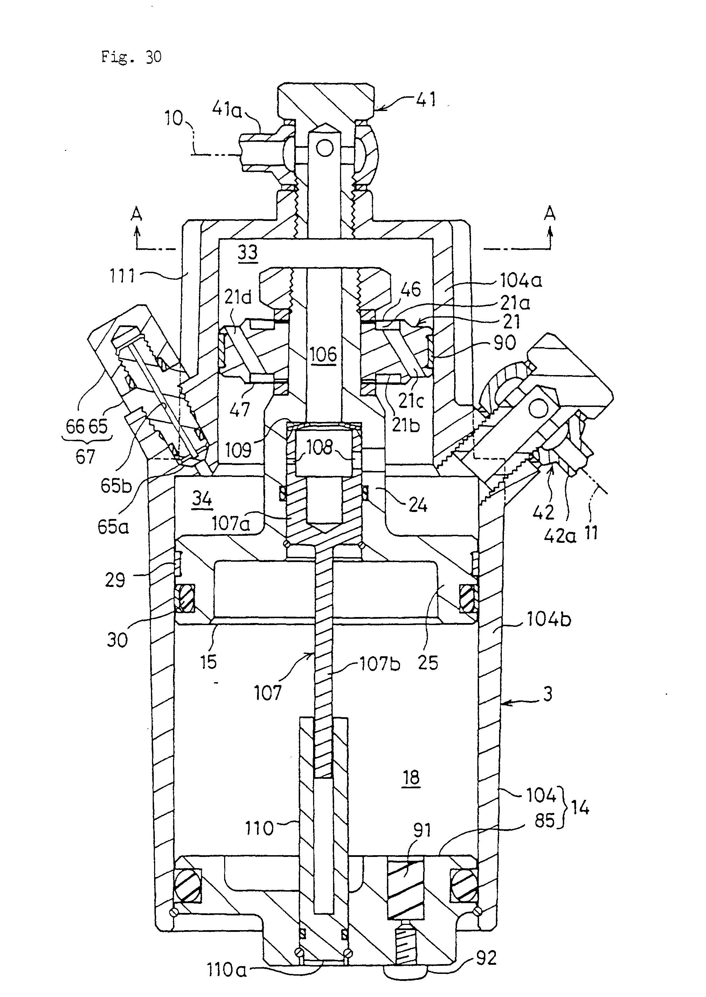

The throttle member 19 shown in Figs.19 and 20 has a generally bottomed cylindrical adjusting member 71 rotatably fitted in the core portion of the valve supporting member 45, and is so constructed that the substantial throttle amount of the throttle body 21 is changed according to the rotational position of the adjusting member 71. Describing further in detail, the valve supporting member 45 has a smaller diameter hole 72 bored through its core portion and opened through its tip end portion in communication with the chamber B, a base end (upper end as seen in Fig.30) side larger diameter hole 73 bored through its core portion in communication with the hole 72 and opened through its other end surface, and a cross hole 74 making the larger diameter hole 73 communicate with the chamber A. The adjusting member 71 is inserted in the larger diameter hole 73 with its opening portion directed toward the tip end side of the valve supporting member 45.

The adjusting member 71 has a plurality of communicating holes 75 bored from its periphery to its inner surface at regular circumferential intervals in its region corresponding to the cross hole 74. This embodiment has eight communicating holes 75 having different diameters, i.e., different passage sectional areas, and is so constructed that a communicating hole 75 having a desired sectional area is selectively brought to the position opposite to the cross hole 74 by rotating the adjusting member 71.

That is, the chambers A and B in the throttle member 19 are made communicate with each other through the cross hole 74-, selected communicating hole 75, hollow portion of the adjusting member 71, larger diameter hole 73 and smaller diameter hole 72 forming a bypass passage as a whole.

Since the rate of oil flow through this bypass passage changes according to the passage sectional area of the selected communicating hole 75, the amount of throttle of the throttle body 21 is changed by changing the communicating hole 75 positioned opposite to the cross hole 74. The oil flow through the bypass passage increases and the amount of throttle in the throttle body 21 decreases when a communicating hole 75 having a larger passage sectional area is positioned opposite to the cross hole 74, while, on the contrary, the oil flow through the bypass passage decreases and the amount of throttle in the throttle body 21 increases when a communicating hole 75 having a smaller passage sectional area is positioned opposite to the cross hole 74. Although the number of the communicating holes 75 is eight in this embodiment, this number may be appropriately changed. On the other hand, the adjusting member 71 may be provided with a blind portion with which the bypass passage is closed.

A feature formed on the outer end surface of the adjustig member 71 and provided with a symbol 76 is a groove to be engaged with the tip end of, e.g., a flat type screwdriver. The adjusting member 71 can be rotated by bringing a flat screwdriver into engagement with this groove 76 and rotating it. The symbols 77 in Fig.19 refer to marks for identifying the rotational position of the adjusting member 71.

The 0-ring 78 shown in Fig.20 functions, not only for preventing oil from leaking out, but also for producing a resistance against free rotation of the adjusting member 71. The symbol 79 refers to a circlip for preventing the adjusting member 71 from coming out. Even if the throttle member 19 is constructed as shown in Figs.18 through 20, effects equivalent to those of the preceeding embodiments can be obtained.

Although the stepped free piston 15 in the embodiments above is formed generally like a bottomed cylinder and its projected portion and base portion are both formed cylindrically, the sectional forms of both portions may be like ellipses, long circles or polygons having many corner portions, etc., without sticking to such limitation. Further, both portions above may not be coaxial, but the axes of both portions may be shifted from each other if only the projected portion is included within the projection area of the base portion as seen in the axial direction and the axes of both portions are parallel to each other.

### Embodiment 3

Next, an embodiment is described in detail referring to Figs. 21 through 24, which does not fall under the scope of the present invention.

Fig.21 is a sectional view showing the schematical structure of the pressure adjusting unit to be used in the suspension system for 4-wheel vehicles according to this embodiment.

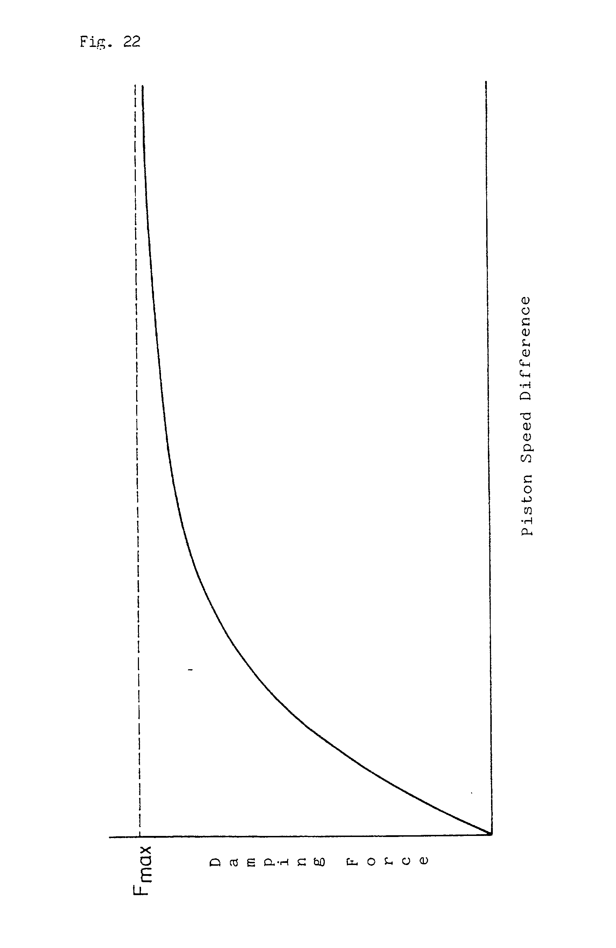

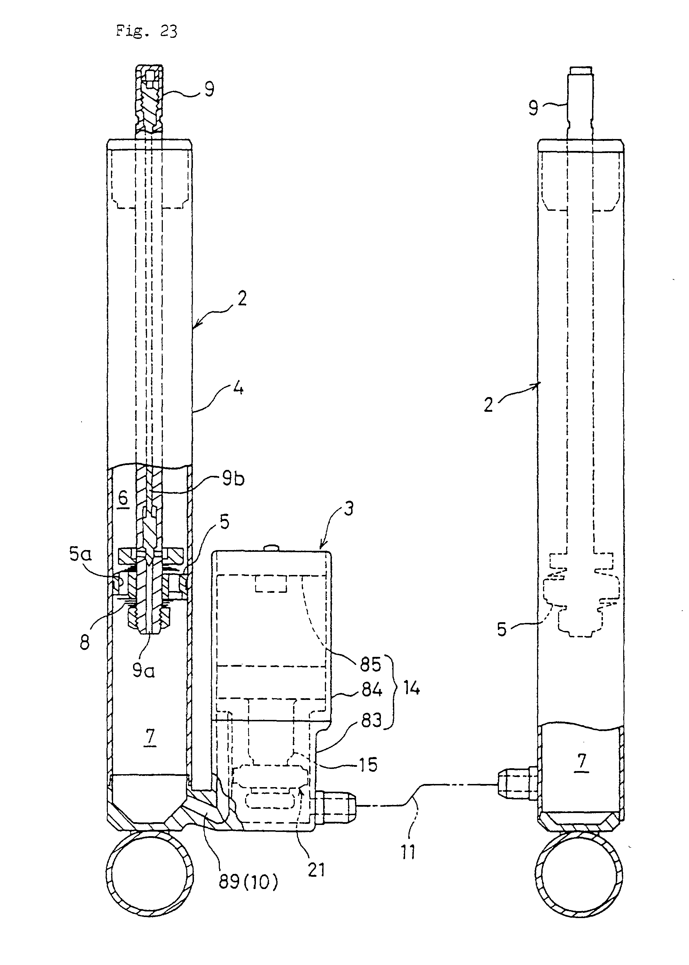

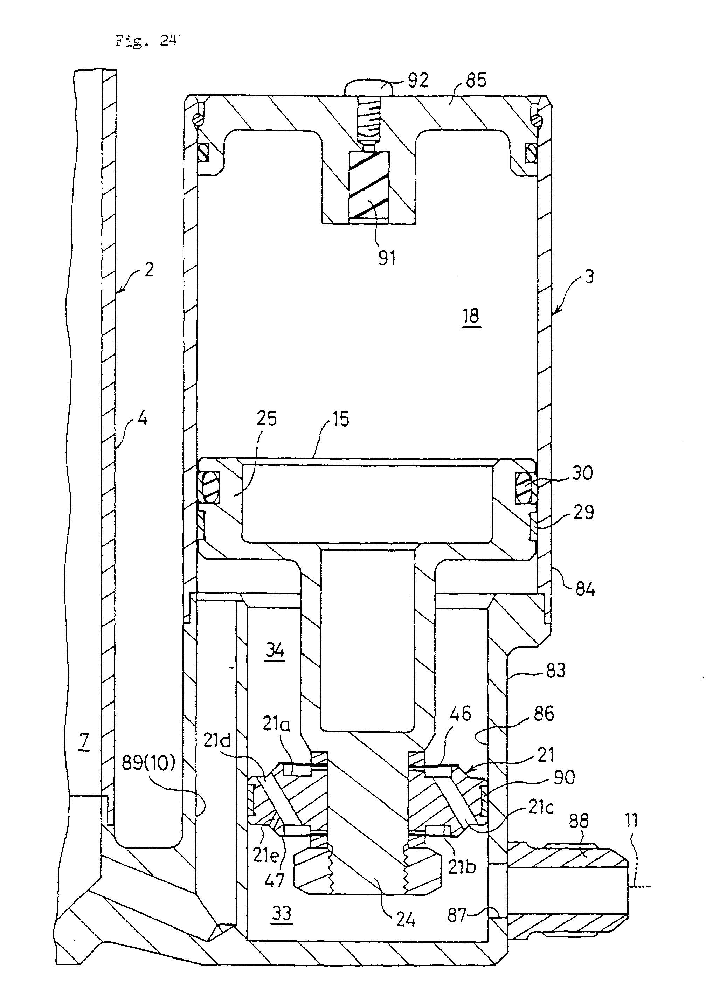

Fig.22 is a graph showing the relation between the piston speed difference between the left and right hydraulic cylinders and the damping force at the throttle member, Fig.23 is a front view showing an example in which the pressure adjusting cylinder is integrally installed on the hydraulic cylinder, and Fig.24 is a sectional view showing a practical example of the pressure adjusting unit to be used in the suspension system for 4-wheel vehicles according to this embodiment. In these drawings, members identical or similar to those already described referring to Figs. 1 through 20 are provided with the same symbols, and their detailed dscriptions are omitted.

The pressure adjusting unit 3 shown in Fig.21 is equivalent to that shown in Fig. 1 except that the throttle member 21 is constructed integrally with the free piston 15. That is, the free piston 15 is so constructed as to function as a throttle body.

The throttle member 21 is constructed with a communicating passage 81 so formed through the free piston 15 as to make the oil chamber 16 (projected portion side oil chamber) communicate with the oil chamber 17 (base portion side oil chamber) and a throttle 82 as a throttling valve located in this communicating passage 81. The damping force of this throttle 82 is so set as to be not greater than the maximum damping force Fₘₐₓ obtained by multiplying the gas pressure in the high pressure gas chamber 18 by the cross-sectional area of the piston rod 9. This is because, since the damping force to be obtained by the throttle 82 changes according to the piston speed difference between both hydraulic cylinders 2 as shown in Fig.22, it is required to set the damping force taking this piston speed difference into consideration. In other words, this is because, if the damping force is set larger than Fₘₐₓ shown in Fig.22, cavitation occurs in the hydraulic passage and it becomes impossible to obtain a stable damping effect.

Therefore, the damping force of the throttle 82 used in this embodimet was so set as to be not greater than Fₘₐₓ of Fig.22 when the piston speed difference is in the actual operating range. Fig.22 shows the characteristic of the damping force to be generated by the throttle 82 for one hydraulic cylinder 2. This damping force was measured moving the piston rod 9 with the throttle in the hydraulic cylinder 2 removed so that oil passes through the piston without suffering any resistance.

When installing this pressure adjusting unit 3 on a vehicle body, its component members are constructed as shown in Figs.23 and 24.

The hydraulic cylinder 2 shown in these drawings is installed between the vehicle body side and the vehicle wheel side by connecting the upper end of the piston rod 9 to the vehicle body (not shown) of the automobile and pivotally supporting the cylinder body 4 on a region, such as the front wheel suspension link, which moves up and down together with the front wheel relative to the vehicle body. Of course, the vertical sense of installation of the hydraulic cylinder may be contrary to that described above.

The left one of these hydraulic cylinders 2 has the bottom portion of the cylinder body 4 formed with the projected portion side body 83 (to be described later) of the pressure adjusting unit 3. The piston rod 9 has a needle 9b installed therein to change the throttle amount at the throttle 8 by changing the passage sectional area of the bypass passage 9a formed vertically through the piston 5. Each of the left and right hydraulic cylinders 2 has a lower oil chamber 7 located lower than the piston 5 and made communicate with the pressure adjusting unit 3 through a left or right hydraulic passage 10 or 11.

The pressure adjusting unit 3 is disposed on the side of the left hydraulic cylinder 2, has a cylinder body 14 constructed with an upward-opening bottomed cylindrical projected portion side body 83 formed integrally on the bottom portion of the left side hydraulic cylinder 2, a cylindrical base portion side body 84 welded on the upper end opening portion of this projected portion side body 83 and a cover body 85 fitted in and fixed on the upper end opening portion of this base portion side body 84, and has a free piston 15 composed of a base portion 25 and a projected portion 24 slidably fitted in the projected portion side body 83 and the base portion side body 84, respectively. In this embodiment, the axis of the pressure adjusting unit 3 and the axis of the left side hydraulic cylinder 2 are parellel to each other.

The free piston 15 used in this embodiment has a structure in which the throttle body 21 is fastened on the projected portion 24 through a nut and moves along together with the projected portion 24, and the throttle body 21 is made function substantially as the projected portion side piston by fitting the periphery portion of the throttle body 21 in the smaller diameter cylinder hole 86 of the projected portion side body 83. That is, the space in the smaller diameter cylinder hole 86 of the projected portion side body 83 is partitioned by the throttle body 21 into a projected portion side oil chamber 33 and a base portion side oil chamber 34 positioned lower and upper, respectively, in Fig.24.

The projected portion side oil chamber 33 is made communicate with the lower oil chamber 7 of the right hydraulic cylinder 2 through an oil hole 87 bored at the bottom portion of the projected portion side body 83, a nipple 88 and a right side hydraulic passage 11. The base portion side oil chamber 34 is made communicate with the lower oil camber 7 of the left hydraulic cylinder 2 through an oil passage 89 bored through the projected portion side body 83. This oil passage 89 constitutes the left side oil passage 10.

The throttle body 21 used in this embodiment has a structure generally similar to that shown in Fig.4, has grooves 21a and 21b formed thereon, has communicating holes 21c and 21d bored axially therethrough, and has check valves 46 and 47 installed thereon as throttling valves. Further, the region of the throttle body 21 to be fitted in the smaller diameter cylinder hole 86 has, installed thereon, a sealing member 90 equivalent to that 29 installed on the base portion 25 of the free piston 15. Further, the throttle body 21 has a small diameter orifice hole 21e for finely adjusting the damping force at the throttle body 21 bored therethrough to make the communicating hole 21d and the projected portion side oil chamber 33 communicate with each other. The diameter of the orifice hole 21e is so selected that a required damping force is obtained by the throttle body 21.

The cover body 85 has, installed therein, a sealing rubber 91 through which a gas pouring injection needle is inserted when high pressure gas is poured into the high pressure gas chamber 18, and a blind screw 92 screwed therein to plug the injection needle inserting hole.

Also with a suspension system for 4-wheel vehicles constructed as described above, the damping force is obtained only by the throttle 8 in the hydraulic cylinder 2 when the left and right hydraulic cylinders 2 are elongated or shortened in the same senses. When the left and right hydraulic cylinders 2 are elongated and shortened in the contrary senses, the vibration of the vehicle body is damped by the resistance against the oil flow through the throttle 8 in the hydraulic cylinder 2 and also by the resistance against the oil flow through the throttle body 21 in the pressure adjusting unit 3. In this instance, since the throttle body 21 partitions the projected portion oil chamber 33 and the base portion side oil chamber 34, oil flows from each oil chamber directly into the communicating passages 21c and 21d of the throttle body 21.

Therefore, since the damping force is obtained by two kinds of throttles when the vehicle body is inclined to the left or right and by one kind of throttle when the vehicle body is moved up or down as is the case with the first embodiment, the using condition of each throttle can be limited and setting becomes easier.

The suspension system described Embodiment 3 has following advantages over the system described as Embodiment 1:
(1) Since the axial end surfaces of the throttle body 21 constitute the inner wall for the projected portion side oil chamber 33 and the inner wall for the base portion side oil chamber 34, oil passages for leading oil from both oil chambers to the throttle body 21 become unnecessary. Therefore, the pressure adjusting unit 3 is simplified and smaller-sized, and the number of its component parts can be reduced.
(2) Since the pressure adjusting unit 3 is formed integrally with the left hydraulic cylinder 2, the bracket or the like for installing the pressure adjusting unit 3 is no more required.
(3) Since the pipe members for constructing the left side hydraulic passage 10 are no more required, pipe members required for making the pressure adjusting unit 3 communicate with the left and right hydraulic cylinders 2 can be only one for forming the right side hydraulic passage 11.
(4) Since the hydraulic passage for making the left and right hydraulic cylinders 2 communicate with the projected portion side oil chamber 33 and base portion side oil chamber 34 can be of simple forms and the flow passage resistance is reduced, the contribution of the hydraulic passage resistance to the damping force is reduced and the width of setting is enlarged when setting the damping force at the throttle body 21.

Although the pressure adjusting unit 3 is installed on the left hydraulic cylinder 2 in the Embodiment 3 above, it may be installed on the right hydraulic cylinder 2. Further, the pressure adjusting unit may be installed not on the side of the hydraulic cylinder 2 but on the axis of the hydraulic cylinder 2.

### Embodiment 4

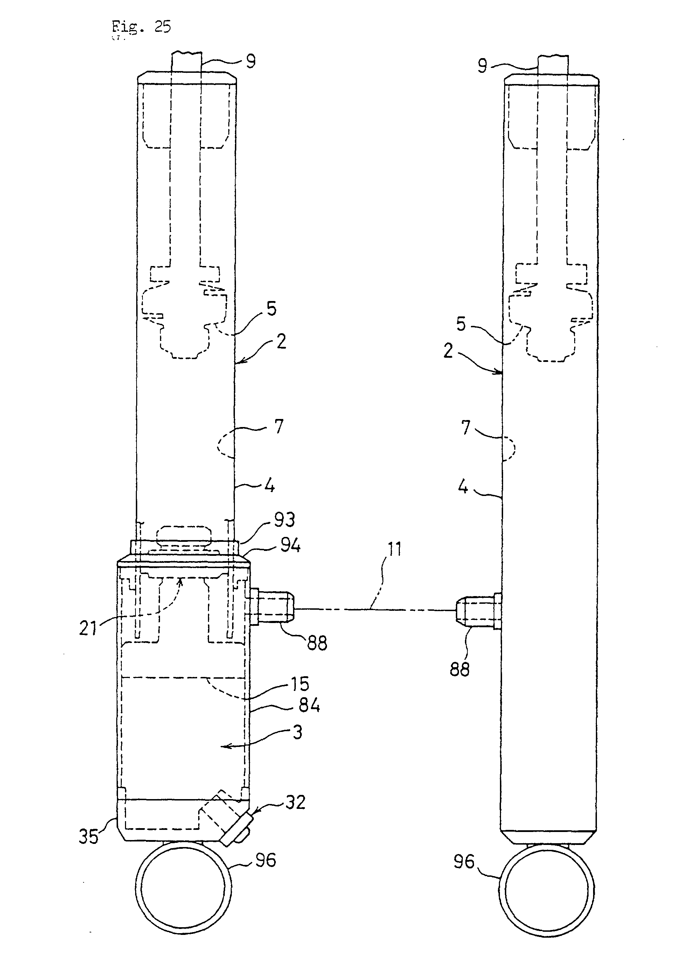

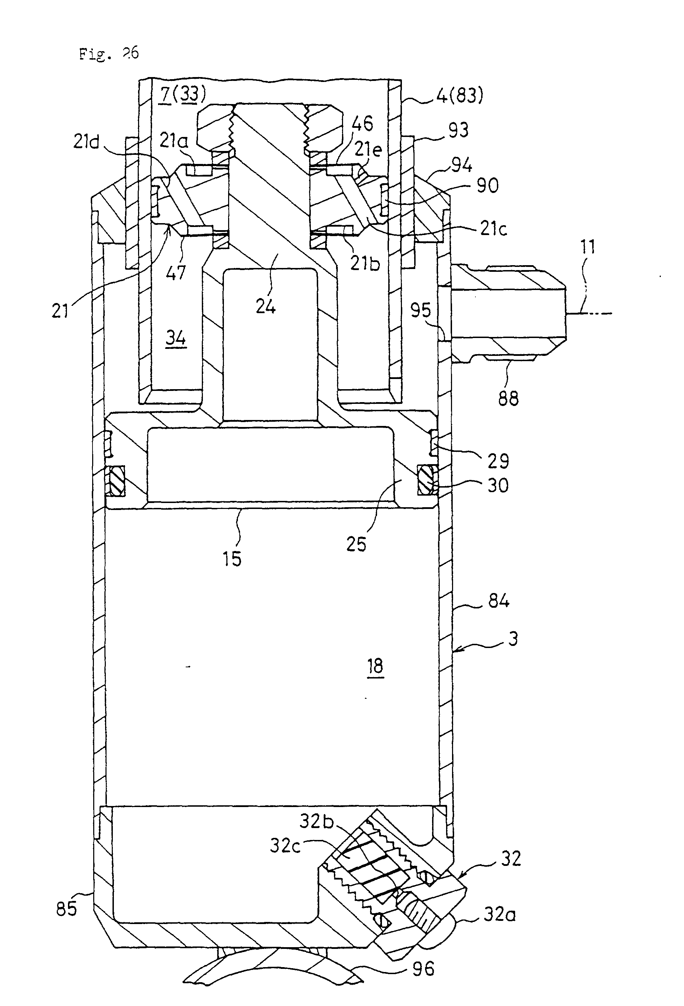

Another embodiment in which the pressure adjusting unit 3 is installed on the axis of the hydraulic cylinder 2 is described in detail referring to Figs.25 and 26.

Fig.25 is a front view showing another embodiment in which the pressure adjusting unit 3 is installed on the axis of the left hydraulic cylinder 2, and Fig.26 is a sectional view showing the pressure adjusting unit in a larger scale. In these drawings, members identical or similar to those already described referring to Figs. 1 through 24 are provided with the same symbols, and their detailed dscriptions are omitted.

The pressure adjusting unit 3 shown in Figs.25 and 26 is constructed by employing the lower end portion of the cylinder body 4 of the left hydraulic cylinder 2 as the projected portion side body and welding the upper end of the base portion side body 84 on the periphery of the lower end portion of the cylinder body 4 through a connecting pipe 93 and a connecting ring 94. The base portion side body 84 is located coaxially with the cylinder body 4.

The throttle body 21 fastened on the projected portion 24 of the free piston 15 through. a nut is fitted into the cylinder body 4 from below, while the base portion 25 of the free piston 15 is fitted in the base portion side body 84. That is, the lower oil chamber 7 of the left hydraulic cylinder 2 functions also as the projected portion side oil chamber of the pressure adjusting unit 3. The base portion side oil chamber 34 is made communicate with the lower oil chamber 7 of the right hydraulic cylinder 2 through an oil hole 95 bored through the upper portion of the base side oil chamber 84 and the right hydraulic passage 11 having a nipple 88.

The cover body 85 closing the lower end portion of the base portion side body 84 is provided with a connecting boss portion 96 for pivotally supporting the lower portion of the hydraulic cylinder 2 on a region, such as the front wheel suspension link, which moves up and down together with the front wheel relative to the vehicle body, and also a plug member 32 shown in Fig. 5.

With such a structure as described above also, effects equivalent to those of the suspension system of Embodiment 3 above can be obtained. The suspension system described as Embodiment 4 has following advantages
(1) The suspension system becomes compact as much as the pressure adjusting unit 3 is not projected downward and sideward of the hydraulic cylinder 2.
(2) Since the smaller diameter cylinder hole in which the projected portion 24 of the free piston 15 is fitted is formed with the cylinder body 4 of the left hydraulic cylinder 2, the pressure adjusting unit 3 becomes more compact.
(3) Since the lower oil chamber 7 of the left hydraulic cylinder 2 functions also as the projected portion side oil chamber of the pressure adjusting unit 3 and the oil passage for making both chambers communicate with each other is disused, the pressure adjusting unit 3 is further smaller-sized in addition to the advantage (2) above.

### Embodiment 5

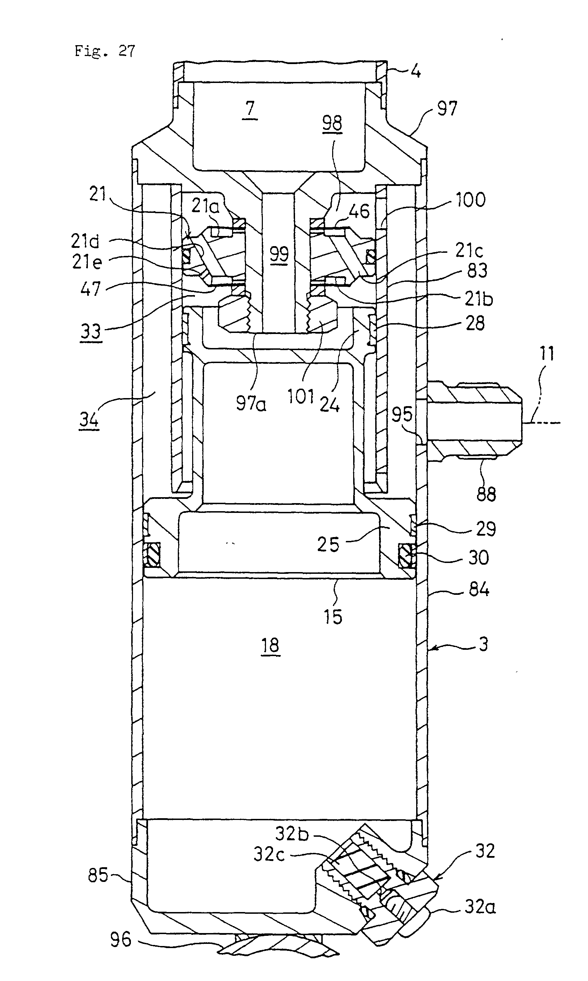

When installing the pressure adjusting unit 3 on the axis of the hydraulic cylinder 2, a structure shown in Fig.27 can be employed also.

Fig.27 is a sectional view showing still another embodiment in which the pressure adjusting unit is installed on the axis of the hydraulic cylinder. In this drawing, members identical or similar to those already described referring to Figs. 1 through 26 are provided with the same symbols, and their detailed descriptions are omitted.

In the pressure adjusting unit shown in Fig. 27, a cylindrical projected portion side body 83 is disposed coaxially in the base portion side body 84, while the upper end openings of these bodies are welded on the bottom member 97 of the hydraulic cylinder 2 forming the projected portion side oil chamber 33 and the base portion side oil chamber 34 therein. The bottom member 97 has a cylindrical portion 97a formed integrally therewith and extended into the projected portion side body 83, and a throttle body 21 is fastened on the cylindrical portion 97a through a nut. The throttle body 21 partitions the space in the projected portion side body 83 into a projected portion side oil chamber 33 on the free piston 15 side and another oil chamber 98 on the opposite side.

The projected portion side oil chamber 33 is made communicate with the lower oil chamber 7 of the hydraulic cylinder 2 through an oil passage 99 formed through the core portionof the bottom member 97, while the oil chamber 98 is made communicate with the base portion side oil chamber 34 through an oil hole 100 opened through the upper portion of the projected portion side body 83. The base portion side oil chamber 34 is made communicate with the lower oil chamber 7 of the right hydraulic cylinder 2 through an oil hole 95 opened through the upper portion of the base portion side body 84 and a right hydraulic passage 11 having a nipple 88.

The projected portion 24 of the free piston 15 has its top surface concaved to shorten the axial length of the free piston 15 and to avoid its interference with members positioned opposite thereto such as the cylindrical portion 97a of the bottom member 97 and the nut 101 for fastening the throttle body 21 on the cylindrical portion 97a.

With such a structure also, effects equivalent to those of Embodiment 4 above can be obtained.

### Embodiment 6

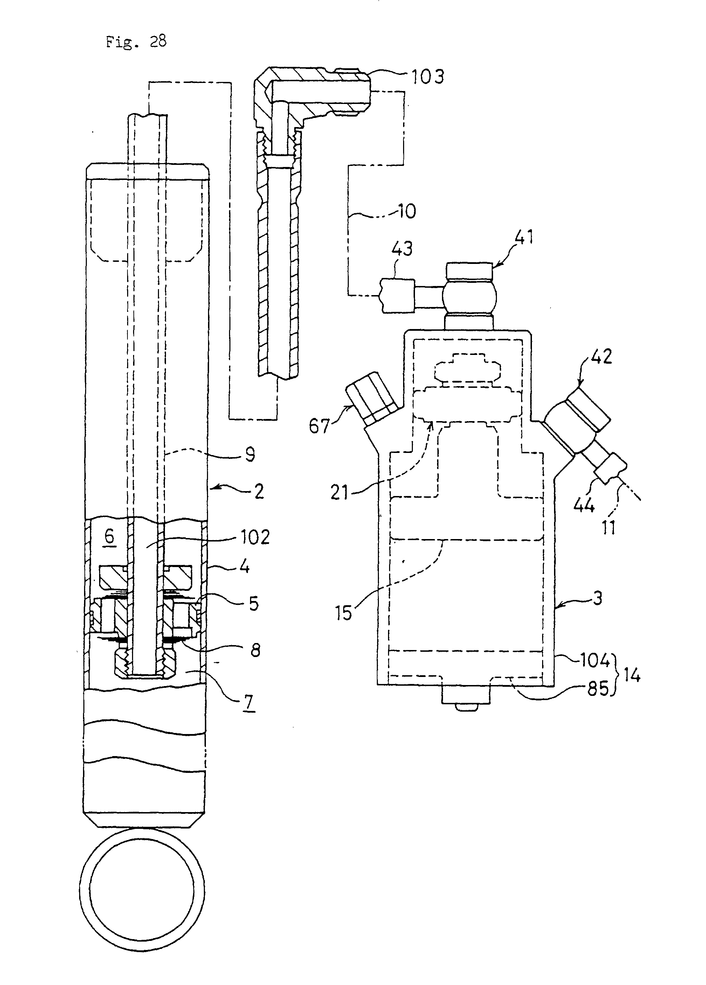

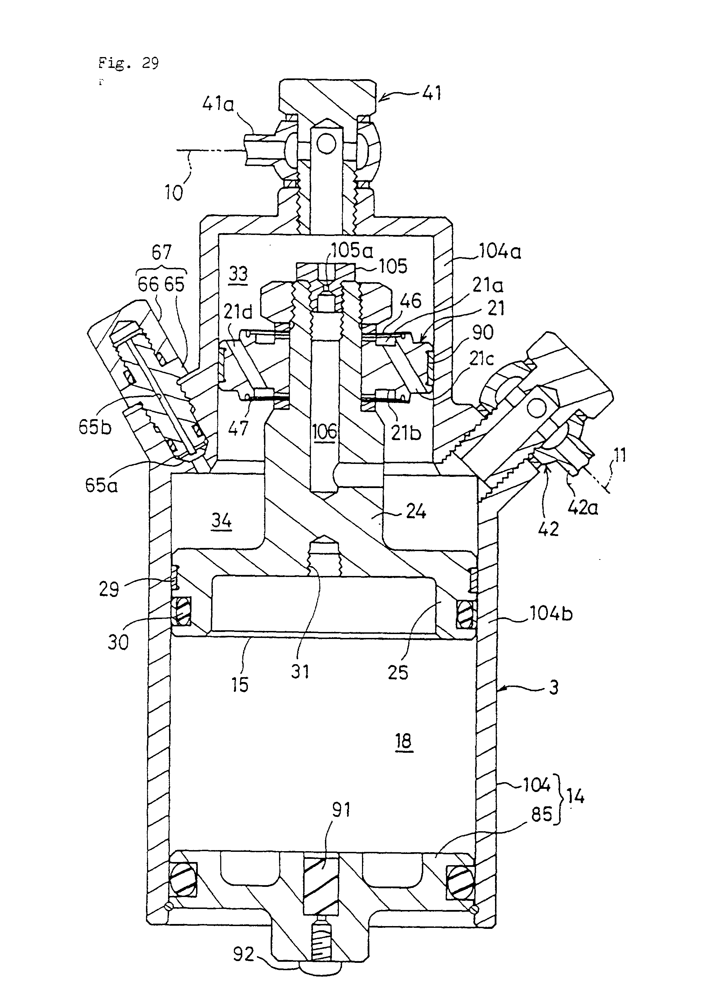

Although the pressure adjusting unit 3 is integrally provided on the hydraulic cylinder in the Embodiments 3 through 5, both members can be separately formed as shown in Figs.28 and 29.

Fig.28 is a front view showing another embodiment in which the pressure adjusting unit and the hydraulic cylinder are formed separately from each other, and Fig.29 is a sectional view showing the pressure adjusting unit in a larger scale. In these drawings, members identical or similar to those already described referring to Figs.1 through 27 are provided with the same symbols, and their detailed descriptions are omitted.

The hydraulic cylinder 2 shown in Fig.28 has an oil passage 102 so formed in the piston rod 9 as to longitudinally penetrate it, and the lower oil chamber 7 is made communicate with the left hydraulic passage 10 through this oil passage 102 and a pipe connector member 103 attached on the upper end of the piston rod 9. While the hydraulic cylinder 2 shown in Fig.28 is one to be disposed on the left side of the vehicle body, the hydraulic cylinder 2 to be disposed on the right side of the vehicle body has the same structure, and its lower oil chamber is made communicate with the right hydraulic passage 11.

When hydraulic cylinders 2 having such a structure are employed and the piston rod 9 is positioned above the spring, the hydraulic hoses or the like forming the left and right hydraulic passages 10 and 11 are prevented from swinging. In addition, since there are only few other vehicle parts such as cushion spring seats near the upper end of the piston rod 9, the hydraulic hoses above or the like are restrained from interfering with these other parts.

The pressure adjusting unit 3 has a cylinder body 14 formed with a downward opening bottomed cylindrical body 104 composed of a lower portion, an upper portion having a diameter smaller than that of the lower portion and a cover body 85 closing the lower end opening portion of the body 104. In the projected portion side oil chamber forming section 104a formed in the body 104 with a smaller diameter is fitted the throttle body 21 fastened on the projected portion 24 of the free piston 15 through a nut, and, in the base portion side oil chamber forming section 104b formed in the body 104 with a larger diameter is fitted the base portion 25 of the free piston 15. By thus fitting, the projected portion side oil chamber 33, base portion side oil chamber 34 and high pressure gas chamber 18 are formed in the cylinder body 14.

The projected portion side oil chamber 33 is made communicate with the left hydraulic passage 10 through an oil hose connector member 41 connected to the bottom portion (positioned at the top in Fig.29) of the body 104, while the base portion side oil chamber 34 is made communicate with the right hydraulic passage 11 through an oil hose connector member 42 connected to the upper portion of the base portion side oil chamber forming section 104b of the body 104.

An oil pouring valve 67 already shown in Fig.7 is installed through the region of the body 104 positioned opposite to the oil hose connector member 42 with respect to the axis of the body 104. Further, the free piston 15 has a screw hole 31 so formed through its base portion 25 as to receive the positioning jig 64 shown in Fig.9. That is, his pressure adjusting unit 3 is so constructed that oil is poured into the hydraulic system by the same method as that for Embodiment 1.

What is screwed into the projected portion 24 of the free piston 15 and provided with a symbol 105 is a throttle for finely adjusting the damping force at the throttle body 21. The throttle 105 has a small diameter hole 105a bored therethrough, and is disposed at the projected portion side oil chamber 33 side opening end of a bypass passage so bored through the projected portion 24 of the free piston 15 as to make the projected portion side oil chamber 33 and the base portion side oil chamber 34 communicate with each other.

To finely adjust the damping force at the throttle body 21, a plurality of throttles 105 having various small hole diameters are preliminarily prepared, and the throttle 105 is exchanged with a throttle 105 having a small diameter hole 105a of a diameter suitable for obtaining the required damping force.

Of course, the free piston 15 may be constructed without the bypass passage 106 or throttle 105 so that the damping force can not be finely adjusted.

### Embodiment 7

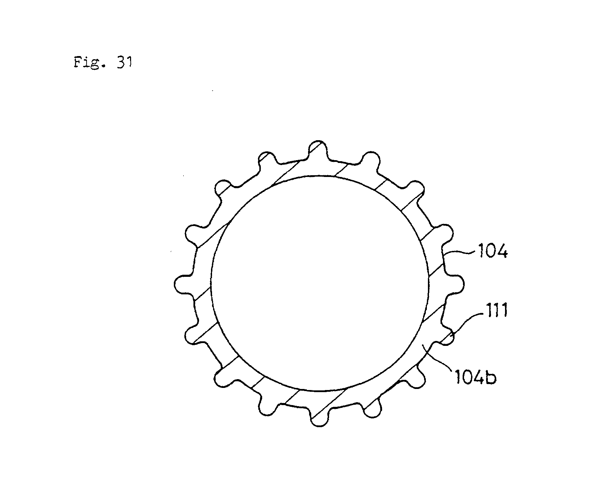

The structure for finely adjusting the damping force at the throttle body 21 by a throttle provided in the bypass passage can be constructed also as shown in Figs.30 and 31.

Fig.30 is a sectional view showing another embodiment in which a movable throttle is provided in the bypass passage of the free piston to finely adjust the damping force, and Fig.31 is a sectional view taken along the line A-A of Fig.30. In these drawings, members identical or similar to those already described referring to Figs.1 through 29 are provided with the same symbols, and their detailed descriptions are omitted.

The pressure adjusting unit 3 shown in Fig.30 has a movable throttle 107 rotatably fitted in the core portion of the free piston 15 so as to cross the bypass passage 106. This movable throttle 107 has a function similar to that of the adjusting member 71 of Embodiment 2 shown in Fig.20, and is formed with a bottomed cylindrical throttle body 107a having a plurality of communicating holes 108 radially bored with various diameters and disposed circumferentially at some intervals, and rotatably fitted in the free piston 15 in a state prevented from coming out, and a shunk portion 107b extended from the throttle body 107a to the high pressure gas chamber 18. What is positioned on the opening end side of the throttle body 107a and provided with a symbol 109 is a disk spring for urging the movable throttle 107 toward the high pressure gas chamber 18.

The shunk portion 107b of the movable throttle 107 has its projected end portion connected to the throttle changing rod 110 fitted in the core portion of, and rotatably supported by, the cover body 85. This connected portion is so constructed that the shunk portion 107b rotates together with the rod 110 when the rod is rotated, and axially moves along relative to the the rod 110 when the free piston axially moves along. The throttle changing rod 110 has a slot 110a formed on its end surface exposed out of the cover body 85, and the rod 110 is rotated by a flat type screwdriver inserted in this slot 110a.

On a pressure adjusting unit 3 provided with a movable throttle 107 constructed as described above, the flow rate of the oil flowing through the bypass passage 106 is changed and the throttle amount at the throttle body 21 is changed according to the cross-sectional area of the communicating hole 108 by selecting the communicating hole 108 by changing the rotational position of the rod 110.

The projected portion side oil chamber forming section 104a of this pressure adjusting unit 3 is provided with many heat radiating fins 111 formed on its periphery at regular circumferential intervals as shown in Fig.31 so that oil in the pressure adjusting unit 3 is effectively cooled by air.

### Embodiment 8

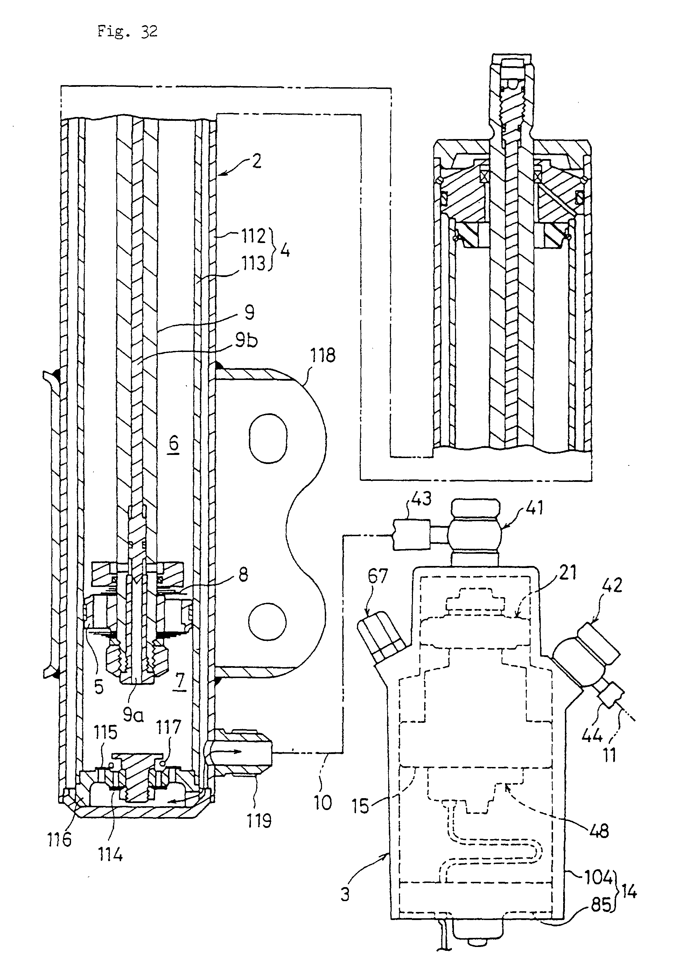

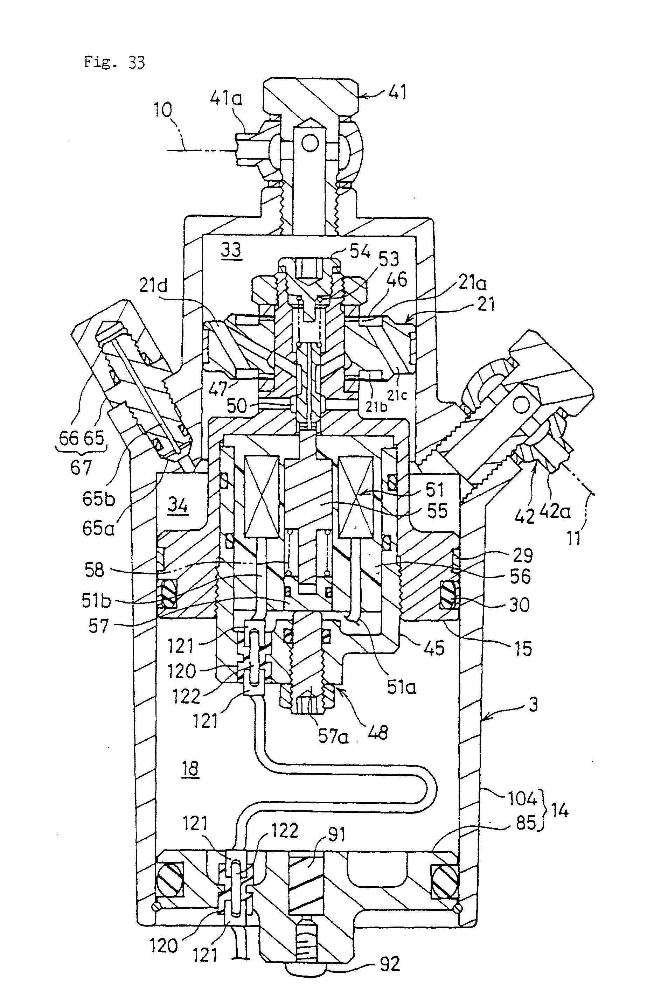

As a structure for finely adjusting the damping force at the throttle body 21 by changing the throttle provided in the bypass passage, other than the structure in which the pressure adjusting unit 3 is directly and mechanically operated as is the case with Embodiments 6 and 7 above, a structure can be employed in which the pressure adjusting unit 3 is remotely controlled as shown in Figs.32 and 33.

Fig.32 is a front view showing another embodiment for finely adjusting the damping force at the pressure adjusting unit by remote control, and Fig.33 is a sectional view showing the pressure adjusting unit above in a larger scale. In these drawings, members identical or similar to those already described referring to Figs.1 through 31 are provided with the same symbols, and their detailed descriptions are omitted.

The hydraulic cylinder 2 shown in Fig.32 is of a so-called double-cylinder type, and its cylinder body 4 is constructed with an outer cylinder 112, an inner cylinder 113 coaxially disposed in the outer cylinder 112 and a piston 5 inserted in the inner cylinder 113. A throttle passage forming member 116 for making the lower oil chamber 7 communicate with the annular oil chamber between the outer cylinder 112 and the inner cylinder 113 through throttles 114 and 115 is installed on the lower end portion of the inner cylinder 113. The member provided with a symbol 117 is a compression coil spring for urging the throttle 115 toward the passage closing side, and the member provided with a symbol 118 is a bracket for installing the cylinder body 4 on a knuckle (not shown) of the front wheel suspension.

The annular oil chamber of this hydraulic cylinder 2 is made communicate with the left hydraulic passage 10 through a nipple 119 installed on the lower portion of the outer cylinder 112. The hydraulic cylinder 2 disposed on the right of the vehicle body has the same structure as that described above, and its annular oil chamber is made communicate with the right hydraulic passage 11.

The pressure adjusting unit 3 is provided with a solenoid type adjusting valve device 48 already described in connection with Embodiment 1 (see Fig.4). The detailed description of the solenoid type adjusting valve device 48 is omitted here because it overlaps with that for Embodiment 2. In this embodiment, the valve supporting member 45 of the solenoid type adjusting valve device 48 is screwed into the free piston 15 from the high pressure gas chamber 18 side. By employing such a structure, sealing members 120 are inserted in the portions where the lead wires 51a and 51b penetrates the valve supporting member 45 and the cover body 85. The members provided with symbols 121 are couplers for the lead wires 51a and 51b, and the members provided with a symbol 122 are terminals.

When the pressure adjusting unit 3 is incorporated with a solenoid type adjusting valve device 48 as described above, since the damping force at the throttle body 21 can be finely adjusted by remote control, it becomes possible to adjust the damping force even while the vehicle is running.

According to the above described embodiments, on a suspension system for 4-wheel vehicles comprising hydraulic cylinders installed on at least two of four vehicle wheels and each partitioned into an upper oil chamber and a lower oil chamber by a throttled piston and each installed between the vehicle wheel side and the vehicle body side by connecting one and the other of the cylinder body thereof and the piston thereof to one and the other of the vehicle wheel side and the vehicle body side, and pressure adjusting cylinders each partitioned into an oil chamber communicating with one of upper and lower oil chambers of the hydraulic cylinders and a high pressure gas chamber by respective free pistons. the free pistons for the pressure adjusting cylinders being constructed integrally so as to operate together, and the pressure adjusting cylinders being made communicate with respective hydraulic cylinders through respective hydraulic passages made communicate with each other through a throttle member,

the two pressure adjusting cylinders are integrally constructed with a stepped free piston having a base portion and a projected portion projected therefrom axially thereof and included within the projection area of the base portion as seen axially thereof, and a cylinder body in which the base portion and projected portion of the stepped free piston is fitted to form a base side oil chamber, projected portion side oil chamber and a high pressure gas chamber, and the base portion side oil chamber and the projected portion side oil chamber are made respectively communicate with the hydraulic passages of the hydraulic cylinders.

Therefore, the amount of oil passing through the throttle of the pressure adjusting cylinder is small when both hydraulic cylinders are elongated or shortened in the same senses, and the operations of hydraulic cylinders are damped by the resistance against the oil flow through the throttles of the pistons of the hydraulic cylinders. When both hydraulic cylinders are elongated or shortened in contrary senses, since the amount of oil flowing through the throttle member on the pressure adjusting cylinder side increases, the operation of the hydraulic cylinders is damped by the resistance against the oil flows through the throttles of the pistons of the hydraulic cylinders and the resistance against the oil flow through the throttle member on the pressure adjusting cylinder side.

Therefore, since the throttle member on the pressure adjusting cylinder side exhibits a damping effect when a difference is caused between the senses of operations of two hydraulic cylinders, the using condition of each throttle in the system can be limited, and setting becomes easier.

Further, since the pressure is applied to the free piston only in the direction of its axis even when a pressure difference is caused between the base portion side and the projected portion side of the pressure adjusting cylinder because the free piston is made of a stepped structure in which its projected portion is included within the projection area of the base portion and the axes of its base portion and its projected portion are disposed close to and in parallel to each other, the free piston is not wrenched. Therfore an effect is obtained that the opration becomes smoother.

Still further, since the free piston is of a stepped structure, the free piston has a structure obtained by rigidly connecting substantially two kinds of pistons without using a separate connecting member. Since no connecting member is required between free pistons and the pressure adjusting cylinder may be of a single axis structure because the axes of two kind of free pistons are disposed close to each other, the pressure adjusting cylinder becomes smaller-sized. Therefore, the installing space can be smaller when the suspension system according to this invention is installed on a 4-wheel vehicle vehicle. Moreover, since the free piston is of a structure in which its projected portion is included within the projection area of the base portion and the axes of its base portion and its projected portion are disposed in parallel to each other, these two portions can be easily formed and the parallelism of the axes of both portions is easily obtained.

Still further, since the stepped free piston can be formed through pressing or machining, they can be formed with a high accuracy and a high productivity. Therefore, a high quality suspension system can be obtained with a low cost.

In addition, since the stepped free piston formed with a high accuracy as described. above can be accurately fitted in the pressure adjusting cylinder, the sliding resistance against the movement of the free piston can be smaller, and an effect is obtained that its operation becomes smoother.

Furthermore, on a suspension system for 4-wheel vehicles of the above type, the pressure adjusting cylinder having a stepped free piston is integrally provided with a throttle member. Therefore, the structure of the hydraulic passage for making the throttle member communicate with the pressure adjusting cylinders is simplified and production becomes easier. Further, the pressure adjusting cylinders and the throttle member are integrated, which makes them compact. Further, since a common bracket can be used to install these both on the vehicle body, the installing structure is simplified and their occupying space can be reduced.

Preferrably the throttle member is constructed with a throttle member casing formed on the oil chamber side end portion of the cylinder body for the pressure adjusting cylinders and a throttle body partitioning the casing into two chambers arranged in a direction perpendicular to the axes of the pressure adjusting cylinders, the hydraulic passage from one of the hydraulic cylinders is made communicate with the base portion side oil chamber of the pressure adjusting cylinder through one of these two in-casing spaces while the hydraulic passage from the other of the hydraulic cylinders is made communicate with the projected portion side oil chamber of the pressure adjusting cylinder through the other of the in-casing spaces. Therefore, the communicating passages for making two in-casing spaces of the throttle member communicate with the base portion side oil chamber and the projected portion side oil chamber, respectively, can be formed by boring through the pressure adjusting cylinder with a drill in a direction along its axis.

Therefore, since it becomes possible to make two in-casing spaces of the throttle member communicate with the projected portion side oil chamber and the base portion side oil chamber without using tubing members, the system becomes still more compact. Moreover, since these communicating passages can be formed with a drill, forming is very easy.

Moreover ,the throttle member is composed of a throttle body fitted in the projected portion side oil chamber of the pressure adjusting cylinder so as to partition the projected portion side oil chamber and the base portion side oil chamber and provided with oil passages formed so as to penetrate itself in the axial direction, and a throttling valve located -in the oil passages above. Therefore, since one axial end of the throttle body constitutes an inner wall of the projected portion side oil chamber, the oil passage for leading oil from the projected portion side oil chamber to the throttle body becomes unnecessary.

Therefore, the pressure adjusting cylinder is simplified and smaller-sized, the number of its component parts can be reduced, and its production cost is reduced. Further, since the form of the hydraulic passage from the hydraulic cylinder to the oil chamber in the pressure adjusting cylinder is simplified and the flow passage resistance is reduced, the contribution of the hydraulic passage resistance to the damping force at the throttle body is reduced and the width of setting is enlarged when setting the damping force at the throttle body.

## Claims

1. Suspension system for a vehicle having a plurality of wheels, comprising:
- a pair of hydraulic shock absorbers (2) associated with respective wheels, each of said hydraulic shock absorbers (2) having a throttled piston (5) partitioning a first and second fluid chamber (6, 7) from each other,
- a pressure adjusting unit (3) having a pair of hydraulic pressure chambers (16, 17; 33, 34) connected with one of said fluid chambers (6, 7) of said pair of hydraulic shock absorbers (2) each,
- a biased piston unit (15) being provided for varying the volumina of said hydraulic pressure chambers (16, 17; 33, 34) simultaneously, and
- a throttle member (19) connecting said first fluid chambers (6) of said pair of shock absorbers (2) with each other,
said throttle member (19) comprises a throttle body (21), **characterized in that** said pressure adjusting unit (3) comprises a cylinder body (14), and said throttle member (19) is integrally formed with said cylinder body (14) as an integral unit, wherein a solenoid type adjusting valve device (48) for adjusting a throttle amount at said throttle body (21) is located within said integral unit and connected with an electrical control unit (61) through an end of said integral unit.

2. Suspension system according to claim 1, **characterized in that** said piston unit comprises a stepped piston (15) having a large diameter portion and a small diameter portion arranged substantially coaxially with respect to each other, wherein said piston (15) is slidably received in said cylinder body (14) having corresponding small and large diameter portions to define said first and second hydraulic pressure chambers (16, 17; 33, 34).

3. Suspension system according to claim 1 or 2, **characterized in that** a high pressure gas chamber (18) filled with pressurized gas for biasing said piston unit into one direction is defined at a side of said piston (15) opposite to said hydraulic pressure chambers (16, 17; 33, 34).

4. Suspension system according to at least one of the preceding claims 1 to 3, **characterized in that** a throttle member casing (20) is provided integrally with said cylinder body (14) at the fluid chamber side thereof, wherein said throttle member casing (20) accommodates said throttle body (21) partitioning the same into a first and a second throttle chamber (A, B) each of which is connected with one of said first and second hydraulic pressure chambers (16, 17; 33, 34) of said cylinder unit (3) and one of said fluid chambers (6) of said shock absorbers (2).

5. Suspension system according to claim 4, **characterized in that** said first and second throttle chambers (A, B) are communicated with said first and second hydraulic pressure chambers (16, 17; 33, 34) via communicating holes (35, 36) formed in said cylinder body (14) and extending in a direction parallel to a longitudinal axis thereof.

6. Suspension system according to claim 4 or 5, **characterized in that** said throttle member casing (20) defines an interior extending substantially perpendicular to said longitudinal axis of said cylinder body (14) and having an opening at one side for mounting and inserting said throttle body (21) perpendicular to said longitudinal axis of said cylinder body (14).

7. Suspension system according to at least one of the preceding claims 4 to 6, **characterized in that** said throttle body (21) is provided with a pair of fluid passages (21c, 21d) for communicating said first and second throttle chambers (A, B) with each other, wherein said fluid passages (21c, 21d) are equipped with a check valve (46, 47) each defining a throttle resistance of said fluid passages (21c, 21d).

8. Suspension system according to at least one of the preceding claims 3 to 7, **characterized in that** said hydraulic pressure chambers (16, 17; 33, 34) are arranged on an identical axis, and said piston unit (15) has a base portion (25) separating said high pressure chamber (18) formed on said pressure adjusting unit (3) from said pair of hydraulic pressure chambers (16, 17; 33, 34), wherein said high pressure gas chamber (18) has an opening which is covered by a cover body (85).

9. Suspension system according to at least one of the preceding claims 1 to 8, **characterized in that** said throttle member (21) is adjustable in response to vehicle driving conditions.

10. Suspension system according to at least one of the preceding claims 7 to 9, **characterized in that** said throttle member (19) comprises a bypass passage (49) for communicating said first and second throttle chambers (A, B) in parallel with said pair of fluid passages (21c, 21d), and a valve member (50) for controlling said bypass passage (49).

11. Suspension system according to claim 10, **characterized in that** said solenoid type adjusting valve device (48) is provided for actuating said valve member (50), wherein said solenoid type adjusting valve device (48) is controlled by said electrical control unit (61) in response to driving conditions.

12. Suspension system according to claim 10 or 11, **characterized in that** a plurality of bypass passages (49) are provided and disposed radially with respect to said valve member (50) and substantially opposite to each other so as to eliminate dynamic pressure on said valve member (50).

13. Suspension system according to at least one of the preceding claims 4 to 12, **characterized in that** said throttle body (21) is a pre-assembled unit inserted into said throttle member casing (20) through opening thereof and attached thereto, thereby closing said opening.

14. Suspension system according to at least one of the preceding claims 1 to 13, **characterized in that** said throttle member (19) comprises a rotatable adjusting member (71) having a plurality of bypass passages (75) of different diameter.

15. Suspension system according to at least one of the preceding claims 1 to 14, **characterized in that** said piston (5) of said hydraulic shock absorber (2) is provided with an adjusting means (9b) for adjusting a throttle resistance of said piston (5).

## Patentansprüche

1. Aufhängungssystem für ein Fahrzeug mit einer Vielzahl von Rädern, aufweisend:
- ein Paar hydraulischer Stoßdämpfer (2), die zu entsprechenden Rädern gehören, wobei jeder der hydraulischen Stoßdämpfer (2) einen gedrosselten Kolben (5) aufweist, der eine erste und eine zweite Fluidkammer (6, 7) voneinander trennt,
- eine Druckreguliereinheit (3) mit einem Paar hydraulischer Druckkammern (16,17; 33,34), die mit einer der Fluidkammern (6,7) des Paars hydraulischer Stoßdämpfer (2) jeweils verbunden sind,
- eine gespannte Kolbeneinheit (15), mit der die Volumina der hydraulischen Druckkammem (16,17; 33,34) gleichzeitig geändert werden, und
- ein Drosselelement (19), das die ersten Fluidkammern (6) des Paars Stoßdämpfer (2) miteinander verbindet,
- wobei das Drosselelement (19) einen Drosselkörper (21) aufweist,
**dadurch gekennzeichnet, dass** die Druckreguliereinheit (3) einen Zylinderkörper (14) aufweist und das Drosselelement (19) integral mit dem Zylinderkörper (14) als eine integrale Einheit gebilet ist, wobei eine Einstellventilvorrichtung (48) vom Solenoid-Typ zum Einstellen eines Drosselbetrags an dem Drosselkörper (21) innerhalb der integralen Einheit angeordnet ist und mit einer elektrischen Steuereinheit (61) über ein Ende der integralen Einheit verbunden ist.

2. Aufhängungssystem nach Anspruch 1, **dadurch gekennzeichnet, dass** die Kolbeneinheit einen abgesetzten Kolben (15) mit einem großkalibrigen Abschnitt und einem kleinkalibrigen Abschnitt umfasst, die im Wesentlichen koaxial zueinander angeordnet sind, wobei Kolben (15) gleitend in einem Zylinderkörper (14) mit entsprechenden klein- und großkalibrigen Abschnitten aufgenommen sind, so dass die erste und die zweite Hydraulikdruckkammern (16,17; 33,34) entstehen.

3. Aufhängungssystem nach Anspruch 1 oder 2, **dadurch gekennzeichnet, dass** eine Hochdruckgaskammer (18), die mit Druckgas gefüllt ist, um die Kolbeneinheit in einer Richtung vorzuspannen, an einer Seite des Kolbens (15) gegenüberliegend der Hydraulikdruckkammern (16,17;33,34) ausgebildet ist.

4. Aufhängungssystem nach mindestens einem der vorhergehenden Ansprüche 1 bis 3, **dadurch gekennzeichnet, dass** ein Drosselelementgehäuse (20) integral mit dem Zylinderkörper (14) an der Fluidkammerseite desselben vorhanden ist, wobei das Drosselelementgehäuse (20) den Drosselkörper (21) aufnimmt, der selbiges in eine erste und eine zweite Drosselkammer (A,B) unterteilt, die jeweils mit einer der ersten und der zweiten Hydraulikdruckkammer (16,17; 33,34) der Zylindereinheit (3) und einer der Fluidkammern (6) der Stoßdämpfer (2) verbunden sind.

5. Aufhängungssystem nach Anspruch 4, **dadurch gekennzeichnet, dass** die erste und die zweite Drosselkammer (A,B) mit der ersten und der zweiten Hydraulikdruckkammer (16,17;33,34) über Verbindungslöcher (35,36) in Verbindung stehen, die in dem Zylinderkörper (14) ausgebildet sind und sich in einer Richtung parallel zur Längsachse derselben erstrecken.

6. Aufhängungssystem nach Anspruch 4 oder 5, **dadurch gekennzeichnet, dass** das Drosselelementgehäuse (20) einen Innenraum aufweist, der sich im Wesentlichen senkrecht zur Längsachse des Zylinderkörpers (14) erstreckt und eine Öffnung an einer Seite zum Anbringen und Einführen des Drosselkörpers (21) senkrecht zur Längsachse des Zylinderkörpers (14) aufweist.

7. Aufhängungssystem nach wenigstens einem der vorhergehenden Ansprüche 4 bis 6, **dadurch gekennzeichnet, dass** der Drosselkörper (21) mit einem Paar Fluidkanäle (21c,21d) versehen ist, die die erste und die zweite Drosselkammer (A,B) miteinander verbinden, wobei die Fluidkanäle (21c,21d) jeweils mit einem Rückschlagventil (46,47) versehen sind, das einen Drosselwiderstand der Fluidkanäle (21c, 21d) bestimmt.

8. Aufhängungssystem nach wenigstens einem der vorhergehenden Ansprüche 3 bis 7, **dadurch gekennzeichnet, dass** die Hydraulikdruckkammern (16,17; 33,34) auf einer identischen Achse angeordnet sind und dass die Kolbeneinheit (15) einen Basisbereich (25) besitzt, der die Hochdruckkammer (18), gebildet an der Druckreguliereinheit (3), von dem Paar Hydraulikdruckkammern (16,17; 33,34) separiert, wobei die Hochdruckgaskammer (18) eine öffnung besitzt, die durch einen Abdeckkörper (85) abgedeckt ist.

9. Aufhängungssystem nach wenigstens einem der vorhergehenden Ansprüche 1 bis 8, **dadurch gekennzeichnet, dass** das Drosselelement (21) in Reaktion auf Fahrzeugfahrtbedingungen verstellt werden kann.

10. Aufhängungssystem nach wenigstens einem der Ansprüche 7 bis 9, **dadurch gekennzeichnet, dass** das Drosselelement (19) einen Umgehungskanal (49) umfasst, der die erste und die zweite Drosselkammer (A,B) parallel zu dem Paar Fluidkanäle (21c,21d) verbindet, sowie ein Ventilelement (50), mit dem der Umgehungskanal (49) gesteuert wird.

11. Aufhängungssystem nach Anspruch 10, **dadurch gekennzeichnet, dass** die Einstellventilvorrichtung (48) vom Solenoid-Typ vorhanden ist, die das Ventilelement (50) betätigt, wobei die Einstellventilvorrichtung (48) vom Solenoid-Typ mit einer elektronischen Steuereinheit (61) verbunden ist, die die Betätigungseinrichtung in Reaktion auf Fahrtbedingungen steuert.

12. Aufhängungssystem nach Anspruch 10 oder 11, **dadurch gekennzeichnet, dass** eine Vielzahl von Umgehungskanälen (49) vorhanden und radial in Bezug auf das Ventilelement (50) und im Wesentlichen einander gegenüberliegend angeordnet ist, so dass dynamischer Druck auf das Ventilelement (50) aufgehoben wird.

13. Aufhängungssystem nach wenigstens einem dervorhergehenden Ansprüche 4 bis 12, **dadurch gekennzeichnet, dass** der Drosselkörper (21) eine vormontierte Einheit ist, die in das Drosselelementgehäuse (20) über die Öffnung desselben eingeführt und daran angebracht wird, so dass die Öffnung verschlossen wird.

14. Aufhängungssystem nach wenigstens einem der vorhergehenden Ansprüche 1 bis 13, **dadurch gekennzeichnet, dass** das Drosselelement (19) ein drehbares Regulierelement (71) mit einer Vielzahl von Umgehungskanälen (75) unterschiedlichen Durchmessers umfasst.

15. Aufhängungssystem nach wenigstens einem der vorhergehenden Ansprüche 1 bis 14, **dadurch gekennzeichnet, dass** der Kolben (5) des hydraulischen Stoßdämpfers (2) mit einer Reguliereinrichtung (9b) zum Regulieren eines Drosselwiderstandes des Kolbens (5) versehen ist.

## Revendications

1. Système de suspension pour un véhicule ayant une pluralité de roues, comprenant:
- une paire d'amortisseurs hydrauliques (2) associés à des roues respectives, chacun des amortisseurs hydrauliques (2) ayant un piston à étranglement (5) séparant une première et une deuxième chambre hydraulique (6, 7) l'une de l'autre,
- une unité d'ajustement de pression (3) ayant une paire de chambres de pression hydraulique (16, 17; 33, 34) reliées chacune à l'une desdites chambres à fluide (6, 7) de la paire d'amortisseurs hydrauliques (2),
- une unité de piston rappelée (15) étant fournie pour faire varier les volumes des chambres de pression hydraulique (16, 17 ; **J** 33, 34) simultanément,
- un élément d'étranglement (19) reliant les premières chambres de fluide (6) de la paire d'amortisseurs (2) l'une à l'autre,
- l'élément d'étranglement (19) comprend un corps d'étranglement (21), **caractérisé en ce que** l'unité d'ajustement de pression (3) comprend un corps de cylindre (14), et l'élément d'étranglement (19) est formé d'un tenant avec le corps de cylindre (14) comme unité intégrée, un dispositif d'ajustement du type à électrovanne (48) pour ajuster un degré d'étranglement au corps d'étranglement (21) est situé dans l'unité intégrée et relié à une unité de commande électrique (61) par une extrémité de l'unité intégrée.

2. Système de suspension selon la revendication 1, **caractérisé en ce que** l'unité de piston comprend un piston à gradin (15) ayant une partie de grand diamètre et une partie de petit diamètre essentiellement coaxiales, le piston (15) est logé coulissant dans le corps de cylindre (14), ayant des parties correspondantes de petit et grand diamètre pour délimiter la première et la deuxième chambre de pression hydraulique (16, 17; 33, 34).

3. Système de suspension selon la revendication 1 ou 2, **caractérisé en ce qu'**une chambre de gaz à haute pression (18) emplie de gaz sous pression pour rappeler l'unité de piston dans une direction est formée à un côté du piston (15) opposé aux chambres de pression hydraulique (16, 17; 33, 34).

4. Système de suspension selon au moins l'une des revendications 1 à 3 qui précèdent, **caractérisé en ce qu'**il est fourni une enveloppe d'élément d'étranglement (20) d'un tenant avec le corps de cylindre (14) à son côté des chambres à fluide, l'enveloppe d'élément d'étranglement (20) logeant le corps d'étranglement (21), qui le sépare en une première et une deuxième chambre d'étranglement (A, B) dont chacune est reliée à l'une des première et deuxième chambres de pression hydraulique (16, 17; 33, 34) de l'unité à cylindre (3) et l'une des chambres de fluide (6) des amortisseurs (2).

5. Système de suspension selon la revendication 4, **caractérisé en ce que** les première et deuxième chambres d'étranglement (A, B) communiquent aux première et deuxième chambres de pression hydraulique (16, 17 ; 33, 34) par des trous de communication (35, 36) formés dans le corps de cylindre (14) et s'étendant dans une direction parallèle à son axe longitudinal.

6. Système de suspension selon la revendication 4 ou 5, caractérisé en ce- que l'enveloppe d'élément d'étranglement (20) délimite un intérieur s'étendant essentiellement perpendiculairement à l'axe longitudinal du corps de cylindre (14) et ayant une ouverture à un côté pour monter et insérer le corps d'étranglement (21) perpendiculairement à l'axe longitudinal du corps de cylindre (14),

7. Système de suspension selon l'une quelconque des revendications 4 à 6 précédentes, **caractérisé en ce que** le corps d'étranglement (21) est muni d'une paire de passages de fluide (21c, 21d) pour faire communiquer les première et deuxième chambres d'étranglement (A, B) l'une à l'autre, les passages de fluide (21c, 21d) étant munis d'un clapet anti-retour (46, 47) formant chacun une résistance d'étranglement des passages de fluide (21c, 21d).

8. Système de suspension selon au moins l'une des revendications 3 à 7 qui précèdent, **caractérisé en ce que** les chambres de pression hydraulique (16, 17; 33, 34) sont placées sur un même axe, et l'unité à piston (15) a une partie de base (25) séparant la chambre à haute pression (18) formée sur l'unité d'ajustement de pression (3) de la paire de chambres de pression hydraulique (16, 17; 33, 34), la chambre de gaz à haute pression (18) ayant une ouverture couverte par un corps de couvercle (85).

9. Système de suspension selon au moins l'une des revendications 1 à 8 qui précèdent, **caractérisé en ce que** l'organe d'étranglement (21) est ajustable en fonction de conditions de conduite du véhicule.

10. Système de suspension selon au moins l'une des revendications 7 à 9 qui précèdent, **caractérisé en ce que** l'élément d'étranglement (19) comprend un passage de dérivation (49) pour faire communiquer les première et deuxième chambres d'étranglement (A, B) en parallèle à la paire de passages de fluide (21c, 21d), et un organe de vanne (50) pour commander le passage de dérivation (49) .

11. Système de suspension selon la revendication 10, **caractérisé en ce que** le dispositif d'ajustement de type à électrovanne (48) est conçu pour actionner l'organe de vanne (50), et **en ce qu'**il est commandé par l'unité de commande électrique (61) en fonction de conditions de conduite.

12. Système de suspension selon la revendication 10 ou 11, **caractérisé en ce qu'**une pluralité de passages de dérivation (49) sont prévus et disposés radialement à l'organe de vanne (50), et essentiellement opposés l'un à l'autre de façon à éliminer la pression dynamique sur l'organe de vanne (50).

13. Système de suspension selon au moins l'une des revendications 4 à 12 qui précèdent, **caractérisé en ce que** le corps d'étranglement (21) est une unité pré-assemblée, insérée dans l'enveloppe d'élément d'étranglement (20) par son ouverture et attachée à elle, fermant ainsi l'ouverture.

14. Système de suspension selon au moins l'une des revendications 1 à 13 qui précèdent, **caractérisé en ce que** l'élément d'étranglement (19) comprend un organe d'ajustement rotatif (71) ayant une pluralité de passages de dérivation (75) de diamètres différents.

15. Système de suspension selon au moins l'une des revendications 1 à 14 qui précèdent, **caractérisé en ce que** le piston (5) de l'amortisseur hydraulique (2) est muni d'un moyen d'ajustement (9b) pour ajuster une résistance d'étranglement du piston (5).
